(19) Europäisches Patentamt
European Patent Office
Office européen des brevets

(11) **EP 4 446 801 A1**

(12) **EUROPEAN PATENT APPLICATION**

(43) Date of publication:
**16.10.2024 Bulletin 2024/42**

(21) Application number: **23167996.0**

(22) Date of filing: **14.04.2023**

(51) International Patent Classification (IPC):
**G02F 1/133** (2006.01)

(52) Cooperative Patent Classification (CPC):
**G02F 1/13324;** G02F 1/165; G02F 1/1676;
G02F 2201/44

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: eLstar Dynamics Patents B.V.
**3235 CD Rockanje (NL)**

(72) Inventors:
- **MASSARD, Romaric Mathieu**
  **5651 GW Eindhoven (NL)**
- **VAN MULLEKOM, Steven**
  **5651 GW Eindhoven (NL)**
- **SLACK, Anthony John**
  **83510 Lorgues (FR)**

(74) Representative: **DeltaPatents B.V.**
**Fellenoord 370**
**5611 ZL Eindhoven (NL)**

(54) **LIGHT MODULATOR AND SUBSTRATE HAVING AN ENERGY CONVERSION LAYER**

(57) Some embodiments are directed to a transparent substrate for use in a light modulator. The light modulator has an optical layer. The transparent substrate has at least one electrode system applied on the substrate. The electrode system comprises a stack of a substrate-side electrode, an energy conversion layer, and an optical layer-side electrode. The optical layer-side electrode is arranged to modulate an electric field in the optical layer. The energy conversion layer is configured to convert between energy external to the substrate and a voltage difference between the substrate-side electrode and the optical layer-side electrode.

Fig. 9c

**Description**

**TECHNICAL FIELD**

The presently disclosed subject matter relates to a transparent substrate for use in a light modulator, a light modulator, a light modulator method, a system, a computer storage medium, method of manufacturing a substrate.

**BACKGROUND**

A known light modulator is disclosed in WO2022023180, included herein by reference. The known light modulator comprises transparent or reflective substrates. Multiple electrodes are applied to the substrates in a pattern across the substrate. A controller may apply an electric potential to the electrodes to obtain an electro-magnetic field between the electrodes providing electrophoretic movement of the particles towards or from an electrode.

**SUMMARY**

It would be advantageous to have an improved light modulator, and an improved substrate that may be used therein.

An embodiment of a transparent substrate for use in a light modulator comprises: a substrate-side electrode, an energy conversion layer, and an optical layer-side electrode. The optical layer-side electrode is arranged to modulate an electric field in an optical layer of the light modulator. The energy conversion layer is configured to convert between energy external to the substrate and a voltage difference between the substrate-side electrode and the optical layer-side electrode.

In an embodiment, the energy conversion layer comprises a photovoltaic stack configured to convert light incident on the substrate to the voltage difference. However, different choices for the energy conversion layer can be made. Having an energy conversion layer in the substrate of a light modulator is efficient, as it generates energy. Moreover, the energy conversion layer can be employed in locations where otherwise no energy conversion, e.g., solar cells, are possible, e.g., as they are needed for glazing. Furthermore, fewer electrodes are needed for the combination of the energy conversion layer and the light modulator, then would be needed for an energy conversion layer and a light modulator separately. Furthermore, the optical layer, especially fluid-based, e.g., e-ink, based optical layers, benefit the system further by acting as a heat sink for the energy conversion layer.

An aspect is a light modulator method for a light modulator, a method of manufacturing a substrate as in an embodiment. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium. Another aspect of the presently disclosed subject matter is a method of making the computer program available for downloading.

**BRIEF DESCRIPTION OF DRAWINGS**

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of a building block,
Figure 1b schematically shows an example of an embodiment of a substrate,
Figure 1c schematically shows an example of an embodiment of a substrate,
Figure 1d schematically shows an example of an embodiment of a substrate,
Figure 1e schematically shows an example of an embodiment of a substrate,
Figure 1f schematically shows an example of an embodiment of a substrate,
Figure 1g schematically shows an example of an embodiment of a light modulator,
Figures 2a-2f schematically show an example of an embodiment of a substrate,

Figure 3a schematically shows an example of an embodiment of a light modulator,
Figure 3b schematically shows an example of an embodiment of a light modulator,
Figure 3c schematically shows an example of an embodiment of a car,
Figures 4a-4c schematically show an embodiment of a light modulator,
Figure 5 schematically shows materials used in an embodiment of a light modulator,
Figures 6a, 6b schematically show examples of embodiments of a two-electrode light modulator,
Figures 7a-7g schematically show examples of embodiments of a two-electrode light modulator,
Figure 8a schematically shows examples of embodiments of a three-electrode light modulator,
Figures 9a-9e schematically show examples of embodiments of a four-electrode light modulator,
Figure 10a schematically shows an example of an embodiment of a light modulator system,
Figure 10b schematically shows an example of an embodiment of a two-electrode light modulator system,
Figure 10c schematically shows an example of an embodiment of a three-electrode light modulator system,
Figure 10d schematically shows an example of an embodiment of a four-electrode light modulator system,
Figure 11a schematically shows an example of an embodiment of a power generator system,
Figure 11b schematically shows an example of an embodiment of a power generator system,
Figure 12 schematically shows an example of an embodiment of a four-electrode light modulator system,
Figures 13a and 13b schematically show an example of a controlling method for a four-electrode light modulator system,
Figure 14 schematically shows an example of a controlling method for a light modulator method,
Figure 15a schematically shows a computer readable medium having a writable part comprising a computer program according to an embodiment,
Figure 15b schematically shows a representation of a processor system according to an embodiment.

Reference signs list

The following list of references and abbreviations used in some of the figures, and is provided for facilitating the interpretation of the drawings and shall not be construed as limiting the claims.

| | |
|---|---|
| 10 | a light modulator |
| 11 | a first substrate |
| 12 | a second substrate |
| 13, 13a, 13b | electrodes |
| 14, 14a, 14b | electrodes |
| 15 | a fluid |
| 16 | a controller |
| 30 | particles |
| 20 | a car |
| 21 | a light modulator |
| 40 | a light modulator |
| 41 | a first substrate |
| 42 | a second substrate |
| 43 | a third substrate |
| 46 | a controller |
| | |
| 100-102 | a substrate |
| 111-114 | a main line |
| 121-124 | a main line |
| 131-134 | interdigitated electrodes |
| 140 | a building block |
| 141-144 | a building block |
| 110, 120 | a driving bus |
| 110', 120' | a driving bus |
| 119, 129 | a connecting zone |
| 191, 192 | a direction |
| 603-604 | a substrate |
| 611-622 | a building block |
| 651-662 | a building block |
| 151 | a spacer |

211 transparent substrate
212 electrode
213 energy conversion layer
214 dielectric material
215 spacer
301, 302 an optical layer-side electrode
303, 304 an optical layer-side electrode
303.1 an optical layer-side electrode - patterned layer
303.2 an optical layer-side electrode - large area layer
301.1 an optical layer-side electrode - patterned layer
301.2 an optical layer-side electrode - large area layer
305, 306 a substrate-side electrode
307, 308 a transparent substrate
309 an energy conversion layer
310 an optical layer
311 a dielectric layer
312 a spacer
321 a light modulator
314, 315 a substrate-side electrode
321-332 a light modulator
410 a power generation system
420-423 a light modulator drive system
431-435 a selective connection
413 a diode
400 a selective connection system
410 a power generation system
420 a light modulator drive system
500 a light modulator
505 substrate-side electrode
503 optical layer-side electrode
501 optical layer-side electrode
510 an energy conversion layer
520 a grid
411 a charger
412 a battery
415 a voltage converter
414 a wall plug

1000, 1001 a computer readable medium
1010 a writable part
1020 a computer program
1110 integrated circuit(s)
1120 a processing unit
1122 a memory
1124 a dedicated integrated circuit
1126 a communication element
1130 an interconnect
1140 a processor system

## DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

Embodiments of light modulators are described herein that are capable of generating electricity in addition to modulating light passing through the light modulator. For example, the light modulator may be configured in one of multiple states ranging from transparent to opaque. The light modulator combines an optical layer for modulating light with an energy conversion layer to convert energy between one form and another. Both the optical layer and the energy conversion layer typically each need at least one electrode on either side; interestingly, it turns out to be possible to share one electrode between the optical layer and the energy conversion layer, thus saving an electrode.

Many embodiments are possible. For example, various types of optical layers, various energy conversion layers. Some types of optical layers use two electrodes, one on each side, some use three electrodes, with 2 on one side and 1 on the other. Some optical layers use 4 or even more electrodes. We will refer to embodiments as a two-electrode, three-electrode, or four-electrode to refer to the type of optical layer. The light modulator may have further electrodes, e.g., for the energy conversion layer.

Furthermore, the arrangement of the electrodes may vary. Also, the way the energy conversion and light modulation is driven may differ. For example, in an embodiment, a system of selective connections is used to use an electrode either for energy conversion or for light modulation. In an embodiment, energy conversion and light modulation occur in parallel.

Substrate are disclosed, e.g., for use in a light modulator, in particular, dynamic glazing. The substrate is transparent, and at least one optical layer-side electrode is applied to a side of the substrate, the optical layer-side electrode extending in a pattern across the side of the first substrate.

The substrate is for use in a light modulator having an optical layer. Typically, the light modulator has a first substrate as above, and a second substrate arranged opposite the first substrate. The optical layer extends between the first and second substrate. The second substrate also has at least one optical layer-side electrode applied to it. Optical properties of the light modulator are modifiable by applying an electric potential between the optical layer-side electrode of the two substrates.

Interestingly, the first substrate also has a substrate-side electrode, and an energy conversion layer. The energy conversion layer is between the substrate-side electrode and the optical layer-side electrode of the first substrate. There are various choices possible for the energy conversion layer, but a particularly advantageous choice is a photovoltaic stack. The energy conversion layer converts between energy external to the substrate and a voltage difference between the substrate-side electrode and the optical layer-side electrode.

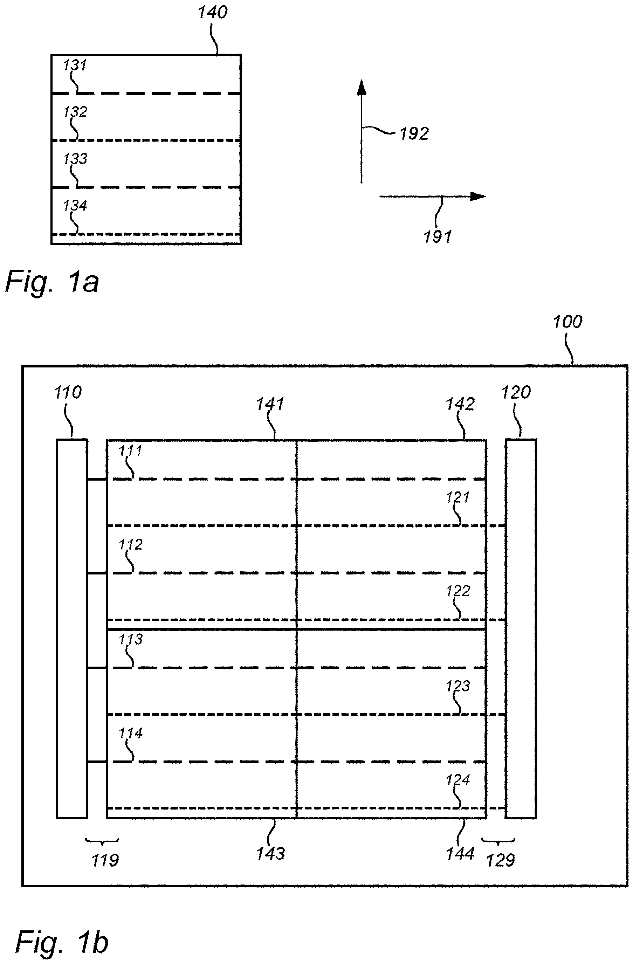

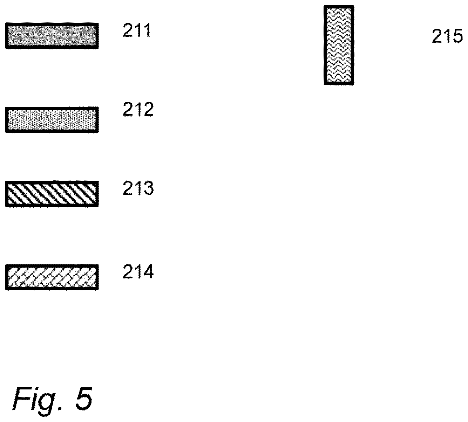

There are many types of light modulators that may use such a substrate. Figures 1a-4c focus on the optical layer-side electrodes on the first and second substrate and how they may be implemented or used in a light modulator. Figures 5 and following, focus on energy conversion layer, and how the electrodes interact with it.

Some of the known light modulators are based on the electrophoretic principle. For example, the substrate may comprise multiple interdigitated optical layer-side electrodes applied to the substrate, e.g., two electrodes, each of the multiple optical layer-side electrodes being arranged in a pattern across the substrate, the multiple interdigitated optical layer-side electrodes being arranged alternatingly with respect to each other on the substrate. Having multiple interdigitated electrodes allows local control over the electric field enabling electrophoretic control of particles.

Electrophoretic light modulators are explained more extensively herein, and are used as the motivating example. In an embodiment, a light modulator comprises a first substrate and a second substrate. At least one of the first and second substrate may be according to an embodiment, having a perforated electrode. For example, the first and second substrates may be arranged with inner sides opposite to each other. Using a substrate according to an embodiment has, e.g., the effect of reducing optical interference. An optical layer is arranged between the first and second substrates. The optical layer-side electrode is arranged to modulate an electrical field in the optical layer. The optical layer comprises a fluid comprising particles, wherein the particles are electrically charged or chargeable. The particles may be moved under control of the electrical field. For example, a controller may be configured to apply an electric potential to the optical layer-side electrode to obtain an electro-magnetic field at the optical layer-side electrode providing electrophoretic movement of the particles towards or from one of the at least one optical layer-side electrode causing modulation of the optical properties of the light modulator.

Below a number of known light modulators are reviewed, showing some of the options in technology and electrodes. These known substrates can advantageously be modified by perforating the electrodes. These examples also show light modulators with varying numbers of electrodes on a substrate. An energy conversion layer may be incorporated int his device, according to an embodiment; In particular, an embodiment tailored for the number of optical layer-side electrodes, e.g., electrodes adjacent to the layer that has modifiable optical properties. The energy conversion layer and substrate-side electrode may be inserted between a substrate and the optical layer-side electrode.

International patent applications WO2011012499 A1 (included herein by reference) and WO2011131689 (included herein by reference) disclose light modulators in the form of electrophoretic display devices, e.g., e-Ink displays. A pixel of the display comprises an accumulation electrode and a field electrode, the accumulation electrode being arranged at a storage area for accumulating charged particles away from an aperture area, and the field electrode occupying a field-electrode area being at least a part of an aperture area of the pixel, the charged particles being movable between the accumulation electrode and the field electrode. In an embodiment, two electrodes are applied on a single substrate. Accumulation electrode and/or field electrode may be perforated.

US patent 10921678 with title 'Electrophoretic device', included herein by reference shows an electrophoretic device having only one patterned electrode on one of two substrates. For example, the one substrate with an electrode according to US 10921678 may be replaced with a substrate according to an embodiment comprising one single electrode. For example, an embodiment comprises a first transparent substrate with a field electrode, and a second substrate opposite of the first substrate, with an accumulation electrode. The first substrate and the second substrate enclose a pixel with a fluid and particles. In use an applied electro-magnetic field to the field electrode and the accumulation electrode provides movement of the particles from the field electrode and the accumulation electrode and vice versa. The field electrode and/or the accumulation electrode may be perforated.

US patent 8054535B2 (included herein by reference) and US patent 8384658B2 (included herein by reference) show alternative example of electrophoretic light modulators in one of two substrates have two patterned electrodes.

Patterned electrodes are also used in dielectrophoretic light modulators. For example, US patent application US2005185104A1 (included herein by reference) and US20180239211A1 (included herein by reference) show a dielectrophoretic light modulators having a substrate with a patterned electrode. Any of these cited electrophoretic or dielectrophoretic light modulators may be adapted by perforating an electrode on a substrate according to an embodiment.

The paper "Reversible Metal Electrodeposition Devices: An Emerging Approach to Effective Light Modulation and Thermal Management", included by reference, also shows a substrate on which a patterned electrode is applied. The patterned electrode may advantageously be arranged according to an embodiment.

An embodiment of a substrate may be used in an electrochromic device (ECD). An electrochromic device (ECD) controls optical properties such as optical transmission, absorption, reflectance and/or emittance in a continual but reversible manner on application of voltage (electrochromism). This property enables an electrochromic device to be used for applications like smart glass, electrochromic mirrors, and electrochromic display devices.

An electrochromic device is described, e.g., in the paper "Silver grid electrodes for faster switching ITO free electrochromic devices" by António Califórnia et al., included herein by reference. The paper describes the preparation of an electrochromic device, in this case one which is ITO free.

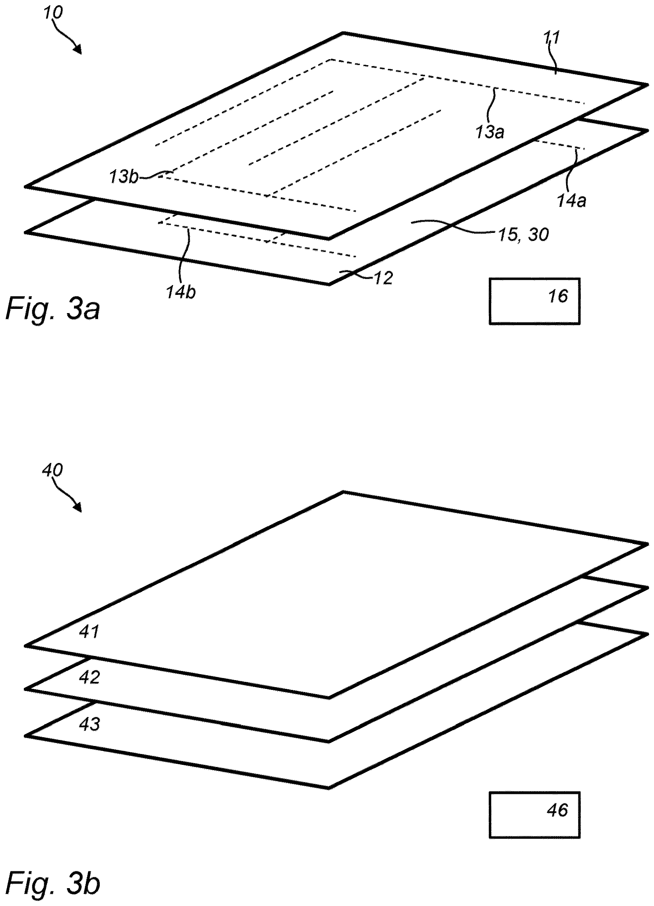

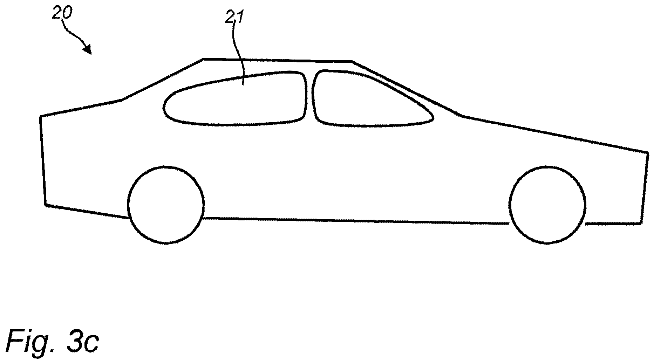

An electrochromic device uses electrically conductive electrodes applied on a substrate. The cited paper uses silver grids, made using silver ink, as electrically conductive electrodes. An electrochromic device may comprise an electrochromic material. The cited paper uses poly(3,4-ethylenedioxythiophene) polystyrene sulfonate (PEDOT:PSS). In an electrochromic device, at least one optical layer-side electrode, e.g., the electrically conductive electrode, is applied to a substrate. The optical layer-side electrode being arranged in a pattern across the substrate. The cited paper discloses two different grid patterns a regular hive and a regular ladder design. See table 1 and figure 3 of the cited paper.

Electrodes may be applied to a substrate by screen-printing on a substrate, in the case of the cited paper, polyethylene terephthalate (PET). The electrodes are typically an electrically conductive material, e.g., a metal or metal oxide. In the cited paper, silver ink was used to screen print the grids on PET using a RokuPrint RP 2.2 equipment and a 180 wired mesh. The samples were allowed to dry in an oven at 130 °C during 15 min. On top of these silver grids, one or two layers of PEDOT:PSS SV3 were posteriorly printed by screen printing. Light passing through an electrode, that in this case is applied in a regular pattern, the electrode, e.g., the pattern, may be perforated according to an embodiment.

For example, the metal grid used in the cited paper may be replaced by an optical layer-side electrode applied to the substrate, the optical layer-side electrode being perforated according to an embodiment.

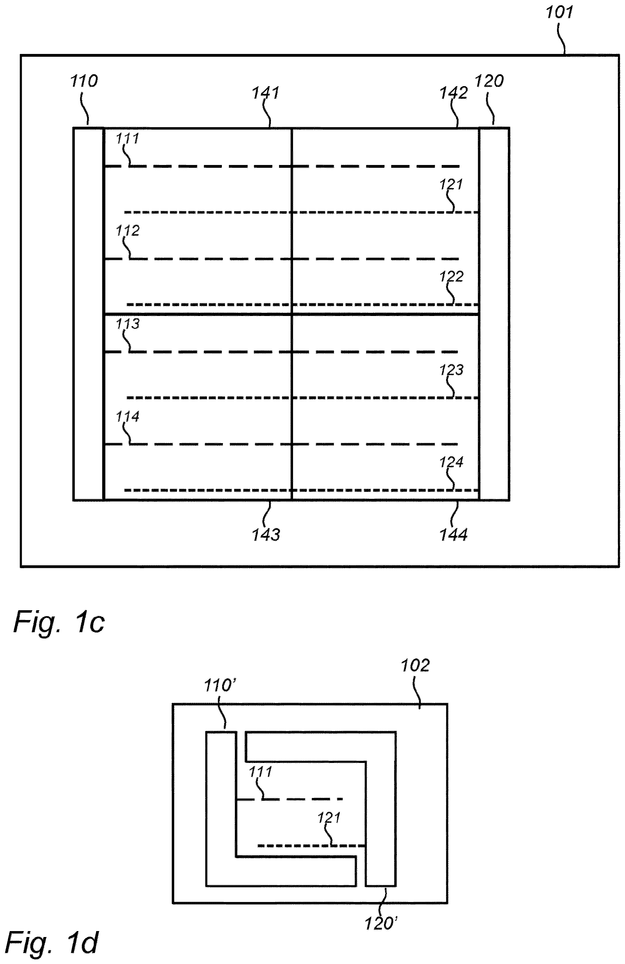

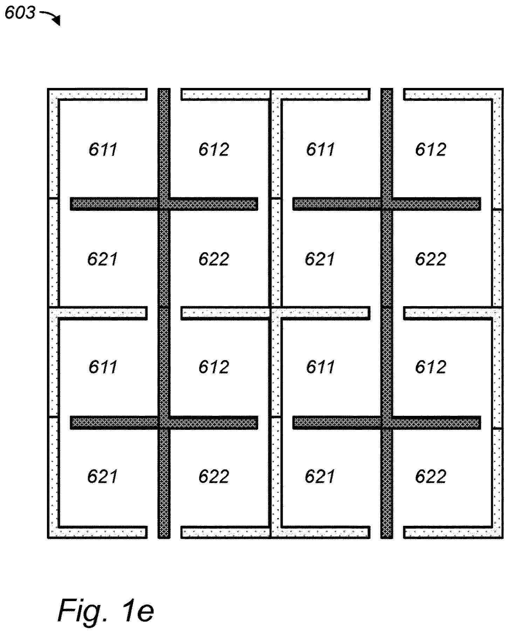

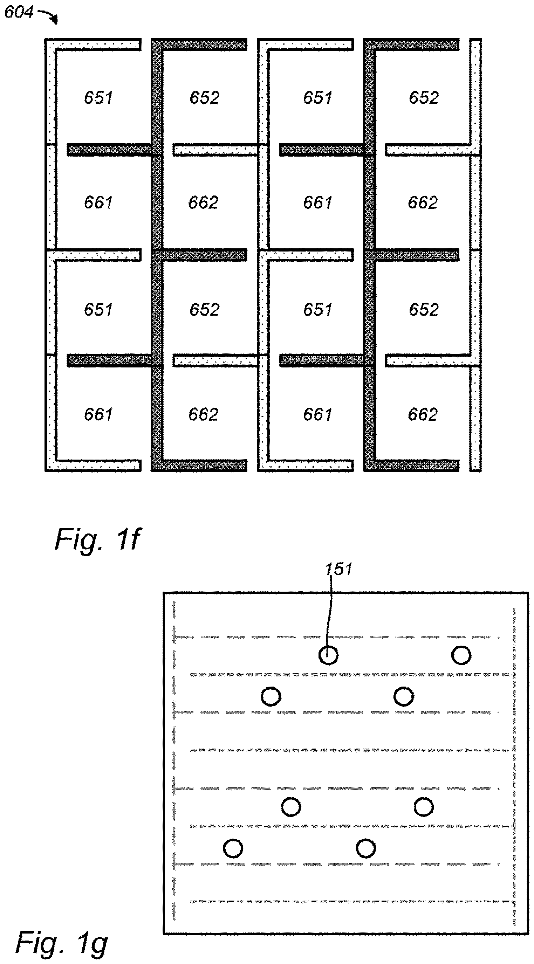

Another example of an electrochromic device is given in US patent 5161048, with title "Electrochromic window with metal grid counter electrode and acidic polyelectrolyte", included herein by reference. For example, an electrochromic device may comprise a transparent electrochromic film and an ion-conductive layer disposed between a pair of electrodes. The metal grid electrode is issued for the electrodes. Figure 1 of the patent shows a metal grid according to the cited patent. To form the counter electrode, a metal grid is disposed adjacent to the second glass substrate.

For example, in an embodiment of an electrochromic device, the electrochromic device may comprise a transparent substrate, an electroconductive electrode member, a transparent electrochromic film in contact with said electroconductive electrode member, an ion-conductive polymer in contact with said electrochromic film; and a patterned conductive electrode in contact with said ion-conductive polymer. The patterned conductive electrode may be according to an embodiment.

A substrate according to an embodiment can be beneficially applied in a number of other technologies. For example, the light modulator may be dielectrophoretic light modulator, e.g., as shown in US20050185104 A1, included herein by reference. A substrate as in an embodiment may also be used in other electrowetting and OLED applications.

In OLED and electrowetting one needs electrodes on only one of the substrates. The substrate with electrodes may be according to an embodiment.

Yet other dynamic glass technologies may be used.

For example, an optical layer for a light modulator, e.g., in dynamic glazing, may use LCD (Liquid Crystal Display) technology. For example, the optical layer may comprise liquid crystal molecules that can be aligned to control the amount of light passing through the display. When an electric current is applied to the liquid crystal molecules, they change their alignment and modify the way that light passes through the material. The optical layer with LCD material may be placed between two layers of glass or plastic and connected to an electrical circuit. By controlling the electric current applied to the LCD material, the amount of light passing through the glazing may be adjusted.

An optical layer for a light modulator, e.g., in dynamic glazing, may use Suspended Particle Device (SPD) technology. The optical layer may comprise particles suspended within a thin film or laminate. By applying an electrical current to the SPD film, the particles align and modify the amount of light passing through the material, allowing for dynamic control of the glazing. When the electrical current is turned off, the suspended particles randomize and allow more light to pass through, creating a clear or transparent effect. When the electrical current is turned on, the particles align and absorb more light, creating a darker or tinted effect.

In an application of the light modulator for glazing both substrates are typically transparent. In other application, e.g., in television, e-readers, etc., only one substrate may be transparent.

**Figure 1b** schematically shows an example of an embodiment of a substrate. The substrate is in particular useful for use in a light modulator, e.g., of a kind described herein. Across the substrate multiple interdigitated optical layer-side electrodes are applied to the substrate. Shown in figure 1b are two interdigitated optical layer-side electrodes. The substrate also comprises at least one substrate-side electrode, and an energy conversion layer; these are not shown in figure 1b, but in other figures herein.

The motivating example use of the substrate is in an electrophoretic light modulator. Typically, an electrophoretic light modulator comprising at least two substrates, each having at least two optical layer-side electrodes; this is not necessary though, for example, an electrophoretic light modulator may comprise a single substrate with 2 electrodes and an opposite substrate with 1 electrode. In any case, preferably, at least one of the substrates in the light modulator is according to an embodiment.

An embodiment of a light modulator comprises a first substrate according to an embodiment and a second substrate. The first and second substrates are arranged with inner sides opposite to each other. At least one optical layer-side electrode is applied to the inner side of the first substrate. An optical layer is arranged between the first and second substrates. A controller is configured to apply an electric potential to the at least one optical layer-side electrode causing modulation of the optical properties of the light modulator. One or both of the first and second substrates are transparent and/or translucent.

There are many different kinds of light modulators that use at least one optical layer-side electrode applied to a substrate. The optical layer and controller may be arranged to modulate optical properties using effects that depend on the potential on the optical layer-side electrode; examples including the dielectrophoretic effect and the electrophoretic effect. For example, optical modulation may comprise the modulation of particles arranged in the optical layer. The number of optical layer-side electrodes may range from one on a single substrate, to multiple optical layer-side electrodes on one or both substrates.

The optical layer arranged between the first and second substrates may comprise particles, e.g., suspended in a fluid. The controller may be configured to apply an electric potential to the optical layer-side electrodes causing the particles to move thus modulating the optical properties of the light modulator.

In an embodiment, the particles comprise electrically charged or chargeable particles, and the controller is configured to apply an electric potential to the optical layer-side electrode to obtain an electro-magnetic field providing electrophoretic movement of the particles. In an embodiment, the electro-magnetic field is arranged between at least two optical layer-side electrodes arranged on the same substrate or arranged on different substrates.

In an embodiment, the particles comprise dielectric particles, and the controller is configured to apply an electric potential to the optical layer-side electrode to apply an electric field gradient to the particles enabling the particles to be moved under the action of dielectrophoretic forces.

The controller may apply an electric signal to one or more of the optical layer-side electrodes. Embodiments that control dielectrophoretic forces may use a signal that comprises a DC signal and/or an AC signal. Embodiments that control electrophoretic forces may use a signal that comprises a DC signal and/or an AC signal.

Shown in figure 1b are two optical layer-side electrodes on the same surface. The two optical layer-side electrodes are indicated in figure 1b in two different dashing styles. There could be more than two electrodes on the same side of the substrate, e.g., to facilitate more fine-grained control of voltage differences across the substrate. The optical layer-side electrodes are applied to a same side of the substrate. Applying electrodes to a substrate may be done lithographically, e.g., using a mask representing the electrodes pattern. Electrodes may also be applied by embedding them in the substrate.

An optical layer-side electrode is electrically connected, e.g., has the same electric potential everywhere. An optical layer-side electrode may comprise driving busses and main lines. At least, the main lines are interdigitated with main lines of a further optical layer-side electrode. Typically, the optical layer-side electrodes extend in a substantially straight line across the substrate, while the main lines are convoluted.

In an embodiment, the two substrates of a light modulator each have two electrodes arranged at its inner surface. Though, as mentioned, multiple electrodes on one or both substrates is not needed. For example, an embodiment of a light modulator comprises a first substrate and a second substrate. For example, the first substrate may comprise one optical layer-side electrode, the second substrate may not comprise optical layer-side electrodes. For example, the first substrate may comprise two optical layer-side electrodes, the second substrate may comprise one optical layer-side electrode. For example, the first substrate may comprise two optical layer-side electrodes, the second substrate may comprise two optical layer-side electrodes. For example, the first substrate may comprise more than two optical layer-side electrodes, the second substrate may comprise two or more optical layer-side electrodes.

Light modulators, wherein each substrate comprises two optical layer-side electrodes are used as a motivating example, though. Designs of substrates featuring two optical layer-side electrodes may be adapted to have a single optical layer-side electrode, e.g., by connecting the two optical layer-side electrodes, or by removing one of the optical layer-side electrodes. Adapting a substrate in such a manner may make it suitable for use in different technologies.

Each of the multiple optical layer-side electrodes are arranged in a pattern across the substrate. The multiple optical layer-side electrodes are arranged alternatingly with respect to each other on the substrate. Typically, an optical layer-side electrode comprises multiple main lines, that each stretch across the substrate. The main lines of the optical layer-side electrodes alternate, e.g., interdigitate. For example, in figure 1b the first optical layer-side electrode comprises main lines 111-114, and the second optical layer-side electrode comprises main lines 121-124. The optical layer-side electrodes are each driven by its driving bus. Figure 1b shows two driving buses: driving bus 110 and driving bus 120. The optical layer-side electrodes also serve to connect the main lines together. For example, in figure 1b, the driving bus 110 drives and connects main lines 111-114; and the driving bus 120 drives and connects main lines 121-124. There can be more main lines than the four shown in this example. The use of main lines is advantageous as it reduces the length of the electrodes, but it is not necessary. A design using only one main line per optical layer-side electrode is not impossible, though having multiple is advantageous.

The multiple of main lines of the first and second electrode are arranged alternatingly with respect to each other on the substrate.

In this example, there are no other connections between the main lines of an electrode than through the common driving bus. In an embodiment, an optical layer-side electrode comprises a mesh electrode, that is, it may have additional electrical connection may be added between electrode lines of the same optical layer-side electrode. This increases the reliability of the electrode. Such additional connections typically cross an electrode line of another optical layer-side electrode, which may be resolved by placing the additional electrical connection in part on a different level with respect to the substrate than the electrode line being crossed. For example, one may place the entire optical layer-side electrodes at a different level than another optical layer-side electrode. In this way, additional connections may be placed without short circuits arising.

A motivating application for a substrate such as substrate 100 is in smart glazing, e.g., a light modulator, which may be applied in domestic housing, offices, green houses, cars, and the like. The level of transparency or reflectivity of the smart glazing can be adapted electrically. For example, in smart glazing two substrates such as substrate 100 would be stacked so that the sides on which the two electrodes are applied face each other. A fluid with particles is enclosed between the two substrates. Smart-glazing embodiments are further discussed below. In an embodiment, electrodes, e.g., two or more electrodes are applied to one surface of each substrate. There could also be one, two or more electrodes on the other surface of substrate 100, e.g., to facilitate stacking of three or more substrates.

Some embodiments below show examples of modulating a transparency or reflectivity level. Light modulators may be adapted for other optical effects. For example, if desired, embodiments could be modified to different levels of translucency instead of different levels of transparency. If desired, the type of particle that is used in an embodiment can be varied, e.g., to particles that differ in which wavelengths they absorb or reflect, and how specular of diffuse the reflection is. For example, in an embodiment, a light modulator can modulate different levels of reflection. Particles can also emit light. Stacking multiple optical layers further increases the possibilities.

Having two sets of alternating main lines is sufficient to provide electrically adaptable glazing; due to the alternating two sets the electric field at any part of the substrate can be controlled as two opposite electrodes border the part from two opposing sides.

Interestingly, the pattern in which the optical layer-side electrodes stretch across the substrate is created by multiple repeated building blocks. Shown in figure 1b, the optical layer-side electrodes on substrate 100 shows four blocks: blocks 141, 142, 143 and 144 which are all substantially the same. The number of building blocks may be larger than four. The building blocks repeat in both directions across the substrate, e.g., a first direction 191, e.g., an x-direction, shown horizontally in the figure, and a second direction 192, e.g., a y-direction, shown vertically in the figure. Using building blocks is advantageous as it allows manufacture using a stepper machine; using building blocks is not necessary.

For example, **figure 1a** schematically shows an example of an embodiment of a building block 140. Building block 140 comprises multiple interdigitated electrodes extending in at least 2 directions across the building block. Shown in figure 1a are four electrodes: electrode 131-134. When the building blocks are repeated across a substrate in two directions, the electrodes in the building block will form the optical layer-side electrodes, e.g., form the multiple main lines of the optical layer-side electrodes. Note that the building blocks are typically connected in a substrate-electrode design tool. Typically, a building block comprise more than four electrode lines. For example, in a range of embodiments between 8 and 12 main lines are used. The number of electrode lines can be much higher though. For example, a building block may comprise many short electrode lines near the edges that connect to lines of other building blocks when the block is repeated. Taking such short offshoots into account, the number of lines could go up to, say, 50. Clearly, when using larger building blocks, the number of electrode lines may go up as well. In an embodiment, the number of electrode lines in a building block is between 8 and 50, or between 8 and 25, etc.

The optical layer-side electrodes that are formed by repeating building blocks are connected to the driving busses. Typically, electrode lines in a building block are connected to electrode lines in neighboring blocks by mering corresponding electrode lines; this is not necessary though, between repeated building blocks connection zones can be inserted that connect corresponding electrode lines.

This step can connect up multiple of the main lines together thus forming a single optical layer-side electrode. Figure 1b shows two connecting zones 119 and 129 in which the main lines belonging to the same optical layer-side electrode are connected to driving bus 110 and driving bus 120, respectively.

The electrodes that are shown in figure 1a are alternately dashed in the same dashing style of figure 1b. Indeed, it happens to be the case in this example, that a particular electrode of the building block of figure 1a will always end up in the first optical layer-side electrode or in the second electrode, e.g., as indicated in this case by the dashing style. This is, however, not necessarily the case. An electrode in a building block may end up as part of the first optical layer-side electrode or as part of the second optical layer-side electrode. This can change, e.g., as a result of the parity of the number of electrodes in the building block, the pattern in which the building blocks are repeated, etc.

For example, a particular pattern of repeated building blocks may be used for a light modulator with two optical layer-side electrodes, in which one might assign alternating main lines to the two optical layer-side electrodes. However, the same pattern of repeated building blocks may be used for a light modulator with three optical layer-side electrodes, in which one might assign every next set of three main lines to the three optical layer-side electrodes.

Furthermore, the building block shown in figure 1a is square, but this is also not needed. For example, a building block may be rectangular. In an embodiment, building block shape(s) could form a so-called tessellation. For example, a building block may be a triangle, a hexagon or even a combination of plane-filling shapes.

As said, figures 1a and 1b are schematic. This is especially the case for the depiction of the electrodes. An electrode as shown in figure 1a is straight, however, in an embodiment, an electrode on the building block is more convoluted, e.g., curved. By adapting the shape of the electrodes undesirable diffraction effects can be altered.

In an embodiment, a dimmable mirror comprises a light modulator according to an embodiment. For example, the dimmable mirror comprises a transparent substrate, an optical layer, and a reflective substrate. One or both of the substrates is according to an embodiment. The dimmable mirror may be electrophoretic. Typically, each substrate has two electrodes, but this is not necessary.

**Figure 1c** schematically shows an example of an embodiment of a substrate 101. Substrate 101 is similar to that of substrate 100, except for how the main lines are connected that formed from the electrodes on the building blocks to the driving buses. In figure 1a, a connection zone is inserted between the repeated building blocks and the driving buses 110 and 120. In the connection zone, the main lines belonging to the same optical layer-side electrode are connected to the same driving bus. In figure 1c, the driving bus are directly adjacent to the building blocks. To avoid that a driving bus would connect to a main line of a different optical layer-side electrode, some of the building blocks are modified.

For example, building block 141 may be a copy of building block 140, but the electrode 134 is shortened so that the main line 122 of which line 134 is a part does not connect to bus 110. In figure 1c the building blocks are substantially the same except that a disconnect is introduced in some electrodes of building blocks next to the driving bus to avoid connecting a main line with the driving bus. Although all building blocks shown in figure 1c are modified in this way, in an embodiment the majority of building blocks would not be modified, e.g., the building blocks that are not adjacent to driving busses 110, 120.

**Figure 1d** schematically shows an example of an embodiment of a substrate 102. In an embodiment, the electrodes in a building block each connect the same opposite sides of the building block. This has the consequence that the main lines that are formed by the electrodes on the building block connect opposite sides of the substrate. In such a situation having only two driving buses, e.g., each extending along an opposite side of the substrate, is sufficient to connect and drive the optical layer-side electrodes.

It is however not required for the electrodes in a building block to connect opposite sides of the building block. Although typically all electrodes in a building block will connect two sides of the building block, it is not required that these two sides are opposite. The reasons for this, is that an electrode may be continued by a next building block. In such a situation most main lines will still connect the same two opposite sides, but at the edge of the substrate this may not happen, as there are no further building blocks there to carry the electrode forward. To allow for more intricate electrode designs on the building blocks, the main line may be connected to a driving bus from two sides, e.g., two sides of the substrate that are adjacent to the same corner of the substrate.

Shown in figure 1d, is a driving bus 110' extending along two sides of the substrate and a driving bus 120' extending along the other two sides of the substrate.

An advantage of this configuration is that the driving buses can be made in the same plane. This is not necessary though. A driving bus could connect from three or all four sides if desired, e.g., to further increase design freedom for the building blocks. Various examples are given herein.

Note that optical layer-side electrodes, e.g., driving busses, and/or main lines are allowed to overlap. This is possible, e.g., by causing a part of dielectric material between the electrodes. For example, such overlapping electrodes could be partly or fully in different planes of the substrate.

For example, in an embodiment one might depose the first optical layer-side electrode. Then locally depose a dielectric, and finally depose a second optical layer-side electrode. The dielectric is arranged to cover at least the points where the first and second electrode cross. A via could be used to the lower first optical layer-side electrode, e.g., to connect to it. The deposing of the optical layer-side electrodes may include the deposing of the driving busses.

**Figure 1e** schematically shows an example of an embodiment of a substrate 602. In figure 1e, a building block has been copied multiple times. To obtain substrate 602, the building block is copied by repeated translation in x-direction and y-direction. Each of the building blocks shown in figure 1e can be obtained by a direct translation of any other building blocks.

A disadvantage with this configuration is that the driving bus of different optical layer-side electrodes end up facing each other. To avoid a short circuit, a small amount of space has been left, e.g., a comparable width as between optical layer-side electrodes, e.g., 50 micrometer. Not shown in figure 1e, but the various parts of the translated driving busses, need to be connected together, e.g., with electrode lines.

For example, indicated at arrow 640, a vertical furrow is formed; that is, two electrode lines that extend in parallel close to each other. Similar furrows exist in the horizontal direction. Such furrows have been found to have a detrimental effect on diffraction. If the building block has low diffraction, then the design may still be better than patterns using less good building blocks, but it would be desirable to avoid these furrows.

**Figure 1f** schematically shows an example of an embodiment of a substrate 603. In substrate 603 the building block is repeated across the substrate, but it is arranged to avoid furrows as in figure 1e. In this embodiment, building blocks are translated and mirrored, in this case in two directions.

Building block 611 has been mirrored in the y-direction to form building block 621. Building block 621 has been arranged directly at the bottom of building block 611. Building block 611 has been mirrored in the x-direction to form building block 612. Building block 612 has been arranged directly at the right of building block 611. Building block 611 has been mirrored in the x-direction as well as in the y-direction to form building block 622. For example, the mirroring may have as mirroring axis a side of the building block.

By mirroring the building block it is ensured that driving busses of the same optical layer-side electrode end up next to each other on the substrate. By merging these driving busses a furrow is avoided, and diffraction is reduced.

In an embodiment, at least the optical layer-side electrodes on the substrate have mirror symmetry; in an embodiment the optical layer-side electrodes and driving busses have mirror symmetry. For example, the substrate is symmetric over an x-axis and/or over a y-axis. This is an important advantage in manufacturing, as this allows the top and bottom substrate to be equal. Eliminating the need to produce separate substrates for the top and bottom of a light modulator, also eliminates the need to keep track of separate type substrates. Moreover, having symmetry in the substrates allows a broken top substrate to be replaced by a bottom substrate and vice versa-as they are the same. A straight line, e.g., a driving bus along the mirror symmetry axis is helpful as the design can be mirrored around it. Using building blocks in mirrored and unmirrored form helps to make mirror symmetric design.

This is particularly advantageous in manufacturing with photolithography steps for patterning electrodes as the same substrate patterning can be used for both substrates of the light modulator limiting production costs. Presence of straight bus bars attached on the building blocks or part of each building block facilitates this effect. Having a symmetrical design in one direction to use same electrode pattern for all substrates is possible without a straight bus bars, for example, by local modification of the electrode design at the edge of symmetry line. In an embodiment, the optical layer-side electrodes pattern have at least 1 symmetry in 1 direction, e.g., using tiling building blocks with mirroring and/or rotation enable electrode pattern design across the substrate.

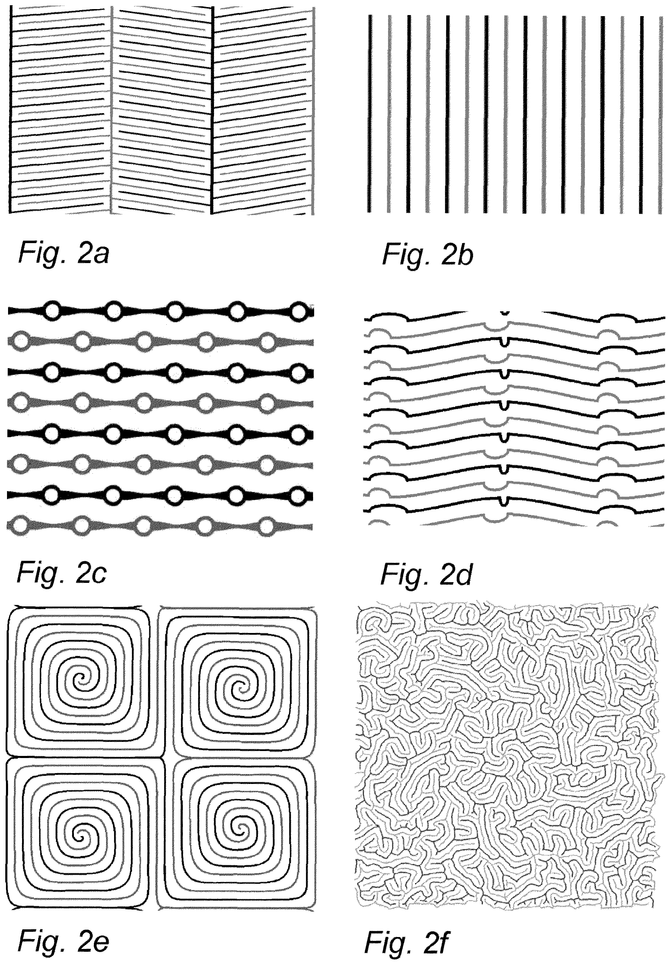

**Figures 2a-2f** schematically show examples of substrates with interdigitated electrodes. These may be embodied on a substrate with two electrodes, e.g., by alternatingly connected electrodes. Figures 2a-2d may also be embodied on a substrate with multiple electrodes, e.g., by connecting in sequences of 3 or 4 or more electrodes.

Figures 2e and 2f show designs with two optical layer-side electrodes on the surface of the substrate. Either design could be modified to have only a single optical layer-side electrodes on the surface of the substrate, e.g., by removing one of the two optical layer-side electrodes. For example, such a modified design could be used in a light modulator that uses a substrate with a single electrode.

The designs shown can be realized in a single plane, without having crossing electrodes. In particular if these designs are connected to two driving buses, no crossing electrodes are needed. When more than two optical layer-side electrodes are used, or if more complicated electrode patterns are used, then crossing of the electrodes may be used, or may even become necessary. Such crossings are possible however for example, at the location where two electrode lines cross a dielectric material may be arranged between the electrodes. For example, such an insulator may be deposited at the crossing location. For example, a first optical layer-side electrode is in a first plane of the substrate and a second optical layer-side electrode is in a second plane of the substrate.

Two substrates according to an embodiment may be combined to form a light modulator. The light modulator is particularly suited to glazing. An exemplary embodiment of a light modulator is shown below.

**Figure 3a** schematically shows an embodiment of a light modulator 10, which may be applied in smart glazing.

Reference is made to patent application PCT/EP2020/052379, which is included herein by reference; this application comprises advantageous designs for light modulator, which may be further improved, e.g., by including electrodes, building blocks, and/or substrates as explained herein.

Light modulator 10 can be switched electronically between a transparent state and a non-transparent state and vice versa, or between a reflective state and a non-reflective state and vice versa. Light modulator 10 comprises a first substrate 11 and a second substrate 12 arranged opposite to each other. On an inner-side of first substrate 11 at least two optical layer-side electrodes are applied: shown are electrodes 13a, 13b. These at least two electrodes are together referred to as electrodes 13. On an inner-side of second substrate 12 at least two electrodes are applied: shown are electrodes 14a, 14b. These at least two electrodes are together referred to as electrodes 14. One or both substrates may also comprise a substrate-side electrode(s) and an energy conversion layer.

A fluid 15 is provided in between said substrate. The fluid comprises particles 30, e.g., nanoparticles and/or microparticles, wherein the particles are electrically charged or chargeable. For example, particles may carry a charge on their surface intrinsically. For example, the particle may be surrounded by a charged molecule.

The electrodes are arranged for driving particles 30 to move towards or away from electrodes, depending on the electric field applied. The optical properties, in particular the transparency or reflectivity of the light modulator depends on the location of particles 30 in the fluid. For example, a connection may be provided for applying an electro-magnetic field to the electrodes.

At least one, but preferably both electrodes 13 and 14 are according to an embodiment, though they are shown schematically in the figures.

In an embodiment, at least one of the electrode pattern on the first substrate and the electrode pattern on the second substrate have a low calculated pixelated noise metric which contributes to diffraction. Interestingly, the electrode patterns on the substrates might not satisfy the bound on their pixelated noise metric individually, but their combination might, that is their superimposition. As this is the pattern that would be visible when looking through the light modulator, a low pixelated noise metric in the superimposition would also contribute to low diffraction. Suitable bounds for the patterns on the first and/or second substrate or for the superimposition include: below 6.05%, or 5%, or 4%

In an example, substrate 11 and substrate 12 may be optically transparent outside of the electrodes, typically > 95% transparent at relevant wavelengths, such as >99% transparent. Taking electrodes into account, transparency can be much lower, e.g., 70%. The term "optical" may relate to wavelengths visible to a human eye (about 380 nm-about 750 nm), where applicable, and may relate to a broader range of wavelengths, including infrared (about 750 nm - 1 $\mu$m) and ultraviolet (about 10 nm-380 nm), and sub-selections thereof, where applicable. In an exemplary embodiment of the light modulator a substrate material is selected from glass, and polymer.

In another example, one substrate, such as a bottom substrate 12, may be reflective or partially reflective, while the top substrate 11 is transparent. The optical properties, in particular the reflectivity of the light modulator depends on the location of particles 30 in the fluid. When the panel is in the open state (vertical drive), the particles will mostly be located between opposite electrodes of the two substrates, such that incident light can pass through the transparent top substrate and the optical layer relatively unhindered, and is reflected or partially reflected on the bottom substrate.

The distance between the first and second substrate is typically smaller than 30 $\mu$m, such as 15 $\mu$m. In an exemplary embodiment of the light modulator a distance between the first and second substrate is smaller than 500 $\mu$m, preferably smaller than 200 $\mu$m, preferably less than 100 $\mu$m, even more preferably less than 50 $\mu$m, such as less than 30 $\mu$m.

In an example the modulator may be provided in a flexible polymer, and the remainder of the device may be provided in glass. The glass may be rigid glass or flexible glass. If required, a protection layer may be provided on the substrate. If more than one color is provided, more than one layer of flexible polymer may be provided. The polymer may be polyethylene naphthalate (PEN), polyethylene terephthalate (PET) (optionally having a SiN layer), polyethylene (PE), etc. In a further example the device may be provided in at least one flexible polymer. As such the modulator may be attached to any surface, such as by using an adhesive.

Particles 30 may be adapted to absorb light and therewith preventing certain wavelengths from passing through. Particles 30 may reflect light; for example, the reflecting may be specular, diffusive, or in between. A particle may absorb some wavelengths, and reflect others. Particles may also or instead emit light, e.g., using phosphorescence, fluorescence, or the like. Even the fluid may emit light, which emittance is modulated by changing the location of particles.

In an exemplary embodiment of the light modulator a size of the nanoparticles is from 20-1000 nm, preferably 20-300 nm, more preferably smaller than 200 nm. In an exemplary embodiment of the light modulator the nanoparticles/microparticles may comprise a coating on a pigment, and preferably comprising a core. In an exemplary embodiment of the light modulator the coating of the particles is made from a material selected from conducting and semiconducting materials.

In an exemplary embodiment of the light modulator the particles are adapted to absorb light with a wavelength of 10 nm-1 mm, such as 400-800 nm, 700 nm -1 $\mu$m, and 10-400 nm, and/or are adapted to absorb a part of the light with a wavelength-range falling within 10 nm-1 mm (filter), and combinations thereof.

In an exemplary embodiment of the light modulator the particles are electrically charged or chargeable. For example, a charge on the particles may be 0.1e to 10e per particle ($5*10^{-7}$-0.1 $C/m^2$).

In an exemplary embodiment of the light modulator the fluid is present in an amount of 1-1000 $g/m^2$, preferably 2-75 $g/m^2$, more preferably 20-50 $g/m^2$, such as 30-40 $g/m^2$. It is a big advantage that with the present layout much less fluid, and likewise particles, can be used.

In an exemplary embodiment of the light modulator the particles are present in an amount of 0.01-70 $g/m^2$, preferably 0.02-10 $g/m^2$, such as 0.1 -3 $g/m^2$.

In an exemplary embodiment of the light modulator the particles have a color selected from cyan, magenta, and yellow, and from black and white, and combinations thereof.

The light modulator can be also configured to only, or primarily, modulate non-visible light such UV or near-IR, e.g., respectively in the range of about 10 nm-380 nm, and in the range of about 750 nm - 1 $\mu$m.

In an exemplary embodiment of the light modulator the fluid comprises one or more of a surfactant, an emulsifier, a polar compound, and a compound capable of forming a hydrogen bond.

Fluid 15 may be an apolar fluid with a dielectric constant less than 15. In an exemplary embodiment of the light modulator the fluid has a relative permittivity □r of less than 100, preferably less than 10, such as less than 5. In an exemplary embodiment of the light modulator, fluid 15 has a dynamic viscosity of above 10 mPa.s.

Electrodes 13a, 13b and electrodes 14a, 14b are in fluidic contact with the fluid. The fluid may be in direct contact the electrodes, or indirectly, e.g., the fluid may contact a second medium with the electrode, such as through a porous layer. In an embodiment, the electrodes cover about 1-30% of the substrate surface. In an embodiment, the electrodes comprise an electrically conducting material with a resistivity of less than 100 n □m (at 273K; for comparison typically used ITO has 105 n□m), which is similar to an electrical conductivity >1*$10^7$ S/m at 20°C).

In an embodiment of the light modulator electrodes comprise copper, silver, gold, aluminum, graphene, titanium, indium, and combinations thereof, preferably copper. The electrodes may be in the form of microwires embedded in a polymer-based substrate; for example, copper microwires.

A connection for applying an electro-magnetic field to the electrodes, wherein the applied electro-magnetic field to the electrodes provides movement of the nano- and microparticles from a first electrode to a second electrode and vice versa. A connection for applying an electro-magnetic field to the electrodes may be provided. For example, in an exemplary embodiment of the light modulator an electrical current is between -100-+100$\mu$A, preferably -30-+30 $\mu$A, more preferably -25-+25 $\mu$A. For example, a power provider may be in electrical connection with the at least two electrodes. The power provider may be adapted to provide a waveform power. At least one of amplitude, frequency, and phase may be adaptable to provide different states in the light modulator. For example, these aspects of the power may be adapted by a controller.

Light modulator 10 may comprise one or more segments, a segment being a single optically switchable entity, which may vary in size. The substrates enclose a volume, which may be a segment, at least partly.

The present device may comprise a driver circuit for changing the appearance of (individual) segments by applying an electro-magnetic field. As such also the appearance of the light modulator, or one or more parts thereof, may be changed. For example, a segment may have an area of at least 1mm$^2$. The present design allows for stacking to allow for more colors; e.g., for full color applications a stack of two or three modulators could provide most or all colors, respectively.

Having one or more segments allows the light modulator to be controlled locally; this is advantageous for some applications, but not necessary. For smart glazing, a light modulator may be used with or without segments. For example, applied in smart glazing, transparency or reflectivity may be controlled locally, e.g., to block a sun-patch without reducing transparency or reflectivity in the whole window. Segments may be relatively large, e.g., having a diameter of at least 1 mm, or at least 1 cm, etc.

In an exemplary embodiment of the light modulator substrates (11,12) are aligned, and/or electrodes (13,14) are aligned. For example, electrodes 13a, 13b and electrodes 14a, 14b may be aligned to be opposite each other. In aligned substrates, electrodes on different substrates fall behind each other when viewed in a direction orthogonal to the substrates. When the light modulator is disassembled, and the substrates are both arranged with electrodes face-up, then the electrode patterns are each other's mirror image.

Aligning substrates may increase the maximum transparency or reflectivity of the light modulator, on the other hand, when selecting a light modulator for more criteria than the range of transparency or reflectivity, etc., it may be better not to align or not fully align the two substrates. Light modulators can be stacked. For example, two stacked light modulators can be made from three substrates, wherein the middles one has electrodes on both its surfaces. In an embodiment of the light modulator optionally at least one substrate 11,12 of a first light modulator is the same as a substrate 11,12 of at least one second light modulator. For stacked modulators, alignment may also increase maximum transparency or reflectivity, but it may be detrimental to other considerations, e.g., diffraction.

**Figure 3b** schematically shows an example of an embodiment of a light modulator 40. Light modulator 40 is similar to light modulator 10, except that it comprises multiple optical layers; in the example as shown two optical layers. There may be more than two optical layers. Each optical layer is arranged between two substrates. Light modulator 40 can be regarded as a stack of two-substrate light modulators as in figure 3a. As shown, light modulator 40 comprises three substrates: first substrate 41, second substrate 42 and third substrate 43. Between substrates 41 and 42 is an optical layer, and between substrates 42 and 43 is an optical layer. The optical layers may be similar to those in light modulator 10. A controller 46 is configured to control electrical current on the electrodes of the substrates. For example, in figure 3b, controller 46 may be electrically connected to at least 4 times 2 equals 8 electrodes.

Interestingly, the particles in the multiple optical layers may be different so that the multiple layers may be used to control more optical properties of the light modulator. For example, particles in different optical layers may absorb or reflect at different wavelengths, e.g., may have a different color. This can be used to create different colors and/or different color intensities on the panel by controller 46. For example, a four-substrate panel may have three optical layers with different color particles, e.g., cyan, yellow, and magenta, respectively. By controlling the transparency or reflectivity for the different colors a wide color spectrum may be created.

The surfaces of the substrates that face another substrate may be supplied with two or more patterns, e.g., as in an embodiment. For example, the outer substrates 41 and 43 may receive electrodes only on an inner side, while the inner substrate, e.g., substrate 42, may have electrodes on both sides.

Substrates 41 and 42 may together be regarded as an embodiment of a light modulator. Likewise, substrates 42 and 43 may together be regarded as an embodiment of a light modulator.

One or more of substrates 41, 42, and 43 may be provided with an energy conversion layer and a substrate-side electrode. Accordingly, an energy conversion layer may be combined with multiple optical layers. Multiple energy conversion layers may be used, even multiple energy conversion layers of multiple types. For example, a different substrate may have a different energy conversion layer, or one substrate may have multiple energy conversion layers.

**Figure 3c** schematically shows an example of an embodiment of a car 20 having smart glazing for windows 21. This is a particularly advantageous embodiment, since while driving the level of incident lighting can change often and rapidly. Using smart glazing in a car has the advantage that light levels can be maintained as a constant level by adjusting the transparency of the car windows. Moreover, the reduced diffraction effect improves safety as it reduces driver distraction. Car 20 may comprise a controller configured for controlling the transparency or reflectivity of windows 21.

Smart glazing can also be used in other glazing applications, especially, where the amount of incident light is variable, e.g., buildings, offices, houses, green houses, skylights. Skylights are windows arranged in the ceiling to allow sunlight to enter the room.

The light modulator may have two optical states, e.g., a transparent state and a non-transparent state, or a reflective state and a non-reflective state. The light modulator, e.g., light modulator 10 or light modulator 40 may be configured to

- switch to the second optical state, e.g., the non-transparent state or to the non-reflective state by creating an alternating voltage on at least one of the first and second substrates, applying an alternating current between at least a first electrode and a second electrode on the first substrate and/or between a first electrode and a second electrode on the second substrate, and

  - switch to the first optical state, e.g., the transparent state or to the reflective state by creating an alternating voltage between the first and second substrate, applying an alternating current between a first electrode on the first substrate and a first electrode on the second substrate, and/or between a second electrode on the first substrate and a second electrode on the second substrate.

The electrode pattern on the first substrate is arranged at least in part in the same pattern as a second electrode on the second substrate. Typically, the electrodes oppose each other, but the pattern of the first electrode and second electrode may also be shifted with respect to each other.

A protective coating may be provided on at least a part of the inner surface area of at least one of the first substrate and the second substrate is provided.

A driving signal applied to optical layer-side electrodes typically has a varying voltage. For example, a power provider may be operated at an AC frequency for switching to a transparent state or to a non-transparent state. Such a signal may have a frequency between, say, 1-1000 Hz. A balanced electrolysis current may be obtained by continuously switching the polarity of oppositely charged electrodes on the first and on the second substrates and/or between the first and the second substrates.

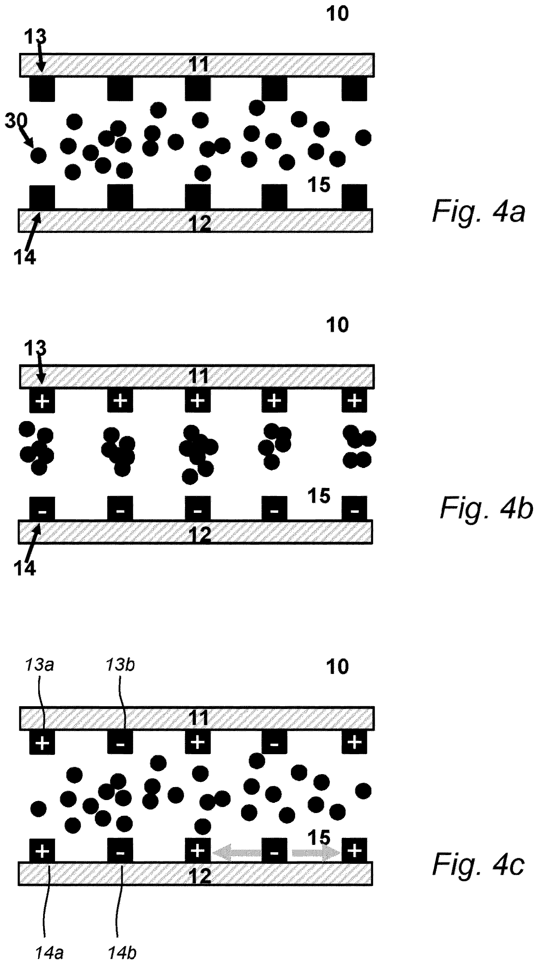

**Figures 4a-4b** schematically show a side view of an embodiment of a light modulator in use. In this figure only the optical layer-side electrodes are shown. The substrate-side electrode(s) and the energy conversion layer(s) are not shown in these figures.

Applying an electric field to the electrodes on the substrates causes an electrical force on the particles. Using this effect, the particles can be moved around and so different transparency or reflectivity states can be caused in the light modulator. A controller may control the electric field, e.g., its amplitude, frequency, and phase. In an embodiment, the controller is connected to at least four electrodes: two for each substrate. But more electrodes may be used and connected to the controller; for example, more than 2 electrodes may be used for a substrate to better fine-tune grey scaling, and driving to non-transparent or non-reflective state. Multiple electrodes may also be used to support multiple segments on the substrate.

**Figure 4a** shows the light modulator without an electric field being applied. No electric force is yet applied on particles 30 suspended in fluid 15, in figure 4a.

In the configuration shown in figure 4a, a conducting electrode pattern, arranged on the top substrate is completely or substantially aligned with a conducting electrode pattern on the bottom substrate. The conducting electrode pattern may be deposited on a transparent or (partially) reflective glass substrate or may be embedded in a plastics substrate, etc.

Alignment between the top-electrode pattern and the bottom electrode pattern contributes to a wider range of achievable levels of transparency or reflectivity. However, alignment is not needed, as similar effects can be obtained without alignment. Without alignment, a range of transparency or reflectivity is likewise obtained.

Note that in these examples, reference is made to the top substrate and the bottom substrate to refer to substrate that is higher or lower on the page. The same substrates could also be referred to, e.g., as the front substrate and back substrate, since in a glazing application, the substrates would be aligned vertically rather than horizontally.

**Figure 4b** shows the light modulator wherein, say at an instance P1, a potential +V1 is applied to each microwire electrode on the top substrate, while a negative voltage, say -V1, is applied to each microwire electrode of the bottom substrate. Thus, in this case, the same positive potential is applied to all electrodes 13, and the same negative potential is applied to electrodes 14. The difference in potential causes negatively charged particles to flow to the vicinity of the electrodes of the top substrate, where the particles will substantially align with the top electrodes. As a result, if both the top and bottom substrate are transparent, the transparency of light modulator 10 will increase. Likewise, if, e.g., the top substrate is transparent and the bottom substrate is reflective, the reflectivity of light modulator 10 will increase If the solution contains positively charged particles they will flow to the vicinity of the electrodes of the bottom substrate, where those particles will substantially align with the bottom electrodes.

A similar transparency or reflectivity can be achieved, when in a second instance, P2, of the on-state, the voltages of the top electrodes and bottom electrodes are reversed in contrast to the instance of P1. In the instance P2, the voltage of each electrode on of the top substrate are now supplied with a negative potential -V1 while the voltages of the aligned electrodes of the bottom substrate are supplied with a positive potential. This state is similar to the state shown in figure 4b, but with top and bottom substrates reversed. In this configuration the transparency or reflectivity of light modulator 10 is also high.

Interestingly, by switching between a positive potential at electrodes at the top substrate, e.g., as shown as electrodes 13 in figure 4b (and a negative potential on electrodes 14), and a positive potential at electrodes at the bottom substrate, e.g., as shown as electrodes 14 in figure 4b, the transparency or reflectivity can be maintained, while decreasing corrosion damage to the electrodes. This alternating electric field can be achieved by applying alternating electric potentials to the top and bottom electrodes.

Applying an AC waveform is optional, but it is a useful measure to increase the lifetime of the light modulator by reducing corrosion. Corrosion can form for example, when using copper electrodes, since copper ions dissolve in an ionic fluid at one substrate and flow to electrode on the opposite substrate, where they deposit. By applying a waveform the direction of copper ion transport is frequently reversed, thus reducing corrosion damage. Between the two instances P1 and P2 the corrosion current between the two substrates is balanced or substantially, e.g., >95%, balanced, e.g., as corrosion rate of an electrode of the top plate occurs there is a balancing deposition of copper on the bottom electrode between each instance of time, P1 and vice versa in instance P2. Therefore, the particles are transitioning or migrating continuously between top and bottom electrode, and the light modulator or smart window is always in the on-state while the dynamic electrolysis current between the top and bottom electrode is constant thus there is no or a negligible net loss of electrode material on the top and bottom substrates.

As the voltages on electrode 13 are equal, an energy conversion layer can cause a potential between electrode 13 and the substrate-side electrode (not shown in figure 4b). The same holds forthe second, bottom, substrate, should an energy conversion layer be applied there too.

**Figure 4c** shows how a state of decreased transparency or reflectivity can be obtained. An alternating voltage is applied on the same substrate. For example, in an embodiment a potential +V2 is applied to a first electrode and the next immediate neighboring electrode has an opposite potential -V2 etc., as shown in fig. 8c. This can be obtained by applying the potential +V2 to electrode 13a and the opposite potential -V2 to electrode 13b. On the opposite substrate the potential +V2 may be applied to electrode 14a and the opposite potential -V2 to electrode 14b. For example, the electrodes may be arranged so that the electrodes on the substrates are aligned; an electrode on the top substrate having an opposite electrode on the bottom substrate, and vice versa. For example, to decrease transparency or reflectivity, the opposite electrode may receive the same potential, while neighboring electrodes receive an opposite potential. An embodiment is shown in figure 4c, wherein four electrodes are indicated with the reference numbers 13a, 13b, 14a and 14b, and the rest of the electrodes continue to alternate.

By using this AC drive cycle between top and bottom substrates, diagonal and lateral electric fields are generated between the two substrates thereby causing haphazard diffusion of the particles thereby creating the closed state of the light modulator. As a result of this configuration, the particles migrate diagonally and laterally between the top and bottom substrate and diffusion of particles into the visible aperture of the light modulator contributes to the closed, opaque state of the light modulator.

As for the transparent state shown in figure 4b, a waveform may be applied to the electrodes, e.g., so that electrodes that are shown in figure 4b with a positive potential become negative and vice versa. As in figure 4b applying a waveform, e.g., between electrodes 13a and 13b and between 14a and 14b reduces corrosion damage to the electrodes.

The AC drive cycle may be implemented by using an interdigitated line configuration combining the top and bottom electrode configuration shown in plan view in figures 1a, 1b, 2a-2f, etc.

The extent with which transparency or reflectivity is increased or decreased in figures 4b and 4c depends on the voltage and frequencies difference. By varying the voltage difference, the amount by which the transparency or reflectivity increases, respectively, decreases, is controlled. For example, a curve representing light transmission versus voltage may be determined, e.g., measured. To obtain a particular level of light transmission, e.g., a particular transparency, e.g., a particular grey-scale level, the corresponding voltage, e.g., AC voltage may be applied. By interpolating the signals for a transparent or for a non-transparent state, levels in between transparent and non-transparent may be obtained. Likewise, a curve representing light reflection versus voltage may be determined, e.g., measured. To obtain a particular level of reflectivity, the corresponding voltage, e.g., AC voltage may be applied. By interpolating the signals for a reflective or for a non-reflective state, levels in between reflective and non-reflective may be obtained.

Different electrode patterns may be used for a light modulator. The electrode patterns may each provide a range of greyscales, e.g., levels of transparency or reflectivity, that the light modulator can attain. However, the particular range of greyscale for any particular electrode pattern may be different from another electrode pattern. In other words, although different patterns give an increased transparency or reflectivity or an increased opacity, the exact response to a drive signal depends on many factors, including the particular pattern that is used. The variations in the optical properties of a light modulator may have a fine resolution, e.g., below 1mm. Note that no pixilation of the light modulator is needed to achieve different optical patterns, e.g., logos, visible in the light modulator.

This effect may be used to embed visible images in the light modulator by locally changing the electrode pattern on the substrates of a light modulator. For example, one may locally have greyscales that have a permanent off-set in greyscale relative to each other, because of a different electrode pattern. For example, by locally changing the electrode pattern or its pitch, the maximum transparency or reflectivity can be altered.

The result is an area on the light modulator which has a different intensity of greyscale, e.g., a different greyscale, or of coloring. The area may have the same color-point, though. In an embodiment, they may switch together with the rest of the window, although at a different rate. For example, even if the same voltage is applied to the electrodes in two different areas, they cause a different transparency state, e.g., different transmission level, due to different electrode patterns. For example, a curve representing transmission versus voltage may be shifted. For example, if voltage control is changed in the same way in both areas, then in both areas light transmission may change, but with a different amount. An area may also be made less response to a drive signal by reducing the density of electrodes; in particular, an area may be made not to switch at all, e.g., by not applying electrodes in the area.

For example, the electrode material may be copper, aluminum, gold, indium-tin oxide (ITO), etc. ITO is transparent while Cu/Al is reflective, thus using a different electrode material, a different appearance may be obtained, irrespective of the voltage driving. Likewise, different materials with a different resistance will give rise to a different electric field. For example, ITO will have a smaller electric field, even though driven with the same voltage.

An embodiment of a method of modulating light, comprises applying an electric potential to multiple optical layer-side electrodes applied to two opposing substrates according to an embodiment to obtain an electro-magnetic field between the multiple optical layer-side electrodes providing electrophoretic movement of the particles towards or from one of the multiple optical layer-side electrodes causing modulation of light shining through the substrates, wherein the two opposing substrates are as in an embodiment.

In figure 4c, different the voltages on electrode 13 are different. This may cause a complication for the energy conversion layer. One solution is to include a selective connection system that disconnects the optical layer electrode from a power generation system. Another solution is to use multiple substrate-side electrodes so that the different voltages on electrode 13, can be applied with a bias to the substrate-side electrodes as well. The same holds for the second, bottom, substrate, should an energy conversion layer be applied there too.

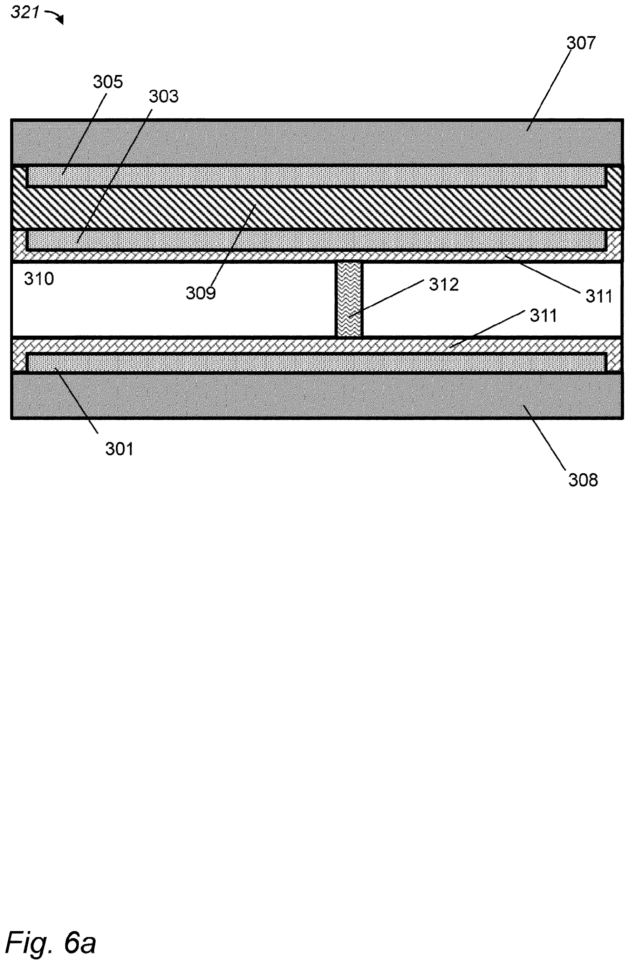

**Figure 5** schematically illustrates materials utilized in an embodiment of a light modulator. To facilitate comprehension, Figures 6a-11 employ the hatching style to denote the same or similar materials.

For instance, using style 211, a transparent substrate is represented. A transparent substrate may comprise, for example, plastic or glass. The substrates typically comprise dielectric materials.

Style 212 signifies an electrode. Electrodes are conductive. Electrodes may be transparent or non-transparent. Various embodiments of electrodes may be employed. For example, an electrode may comprise a large area electrode. A large area electrode covers substantially the entire area of the light modulator; e.g., at least 90%, or even 95% or more of the area. Alternatively, an electrode may be digitated, e.g., shaped into multiple electrode lines extending across the substrate. Multiple digitated electrodes may be combined on the same substrate, in which case the electrode lines typically alternate; this is commonly referred to as interdigitated. A digitated electrode is typically patterned. Electrodes may also comprise both a digitated layer and a large area layer.

The interdigitated electrodes may be at different levels on the substrate, so that they are interdigitated when viewed from the top, e.g., when projected on the substrate. The interdigitated electrodes may be mesh electrodes. Mesh electrodes have the advantage that a break in connection somewhere in the electrodes does not lead to a full loss of connectivity for part of the electrode. Two mesh electrodes can be interdigitated by placing them in different levels. Alternatively, two mesh electrodes may be placed in the same substrate and separated from each other at cross points by a dielectric material.

Style 213 denotes an energy conversion layer. The most common example of an energy conversion layer is a photovoltaic cell. Examples of energy conversion layers that may be utilized in embodiments are described herein.

Style 214 indicates a dielectric. To avoid two electrodes touching each other, a dielectric may be inserted between them.

Style 215 signifies a spacer. To maintain a constant distance between the substrates in a light modulator, spacers may be positioned between the two substrates. The spacers typically comprise dielectric materials, e.g., glass or plastic. Spacers are optional. If the substrates and/or their casings are sufficiently sturdy, spacers need not be employed.

**Figure 6a** schematically shows an example of an embodiment of a two-electrode light modulator 321. Shown in Figure 6a is a first substrate 307 according to an embodiment. First transparent substrate 307 is typically transparent. Arranged on first transparent substrate 307 is an electrode system. The electrode system comprises, in this order, starting from first substrate 307: a substrate-side electrode 305, an energy conversion layer 309, and an optical layer-side electrode 303.

Opposite first substrate 307, a second substrate 308 is arranged. In this embodiment, an optical layer-side electrode 301 is applied to the second substrate. Arranged between the first substrate 307 and second substrate 308 is an optical layer 310.

The optical properties of optical layer 310 may be modulated by applying a voltage difference across the optical layer, e.g., by applying a voltage difference to optical layer-side electrodes 303 and 301. If multiple optical layer-side electrodes are applied to either the first substrate or the second substrate, then the voltage difference may be applied along the optical layer, instead of across it. Depending on the type of optical layer employed, various optical effects may be created.

In this embodiment, a spacer 312 is arranged between the first substrate and the second substrate. A spacer is optional. The following figures do not show a spacer, though one or more spacers may be used if needed, e.g., for structural integrity.

A dielectric material 311 may be used for various purposes. For example, Figure 6a shows a dielectric layer, e.g., a coating, arranged on optical-side electrode 303. This layer avoids direct contact between the electrode and the optical layer. This is especially beneficial if the optical layer is of fluidic type, e.g., comprising particles. Similarly, on optical-side electrode 301 a dielectric layer is also arranged. Such coatings to avoid fluid contact are not necessary; the light modulator will work with fluid contact as well, though the dielectric layers increase the lifetime of the light modulator.

Accordingly, on the first substrate, an energy conversion layer is arranged, flanked on both sides by electrodes, in this case, a substrate-side electrode 305 and an optical layer-side electrode 303. Furthermore, between the first substrate and the second substrate, an optical layer is arranged, also flanked on both sides by at least one electrode: shown here are optical layer-side electrode 303 and optical layer-side electrode 301. For example, the energy conversion layer may be arranged as an energy conversion stack or layer. Note that electrode 303 is used jointly for energy conversion, e.g., from light to electricity, and for optical modulation. By modulating the electric field in the optical layer, which may use optical layer-side electrodes 301 and 303, the optical properties of the optical layer are modulated. Light that passes through the light modulator, e.g., from one of the first substrate 307 and second substrate 308 to the other one, may be altered. For example, it may be dimmed to an extent that depends on the modulation of the optical layer. The embodiment shown in Figure 6a is a two-electrode light modulator. This means that the optical layer has two electrodes that can be controlled, e.g., by a light modulator driver system. Electrodes 303, 305, and 301 may be extended to the edge of the respective substrate for connecting. Instead of extending the electrodes themselves, wires may be arranged in the light modulator.

As described above, various optical layers are known that may be controlled with electrodes, including with two electrodes. For example, the optical layer may comprise electrochromic material, the optical properties of which may be modulated by modulating a voltage across the optical layer comprising the electrochromic material. For example, the optical layer may be a fluid comprising particles. The position of the particles may be modulated by modulating the voltage difference across the optical layer. For example, the particles may be moved due to electrophoretic or dielectrophoretic forces. In the former case, the particles are charged or chargeable. The particles and fluid may be a so-called e-ink.

Other dynamic glass technologies are described herein. For example, the optical layer may comprise LCDs, Suspended Particle Device (SPD), or Reversible Metal Electrodeposition.

In this embodiment, the substrate-side electrode 305 comprises a large-area electrode; the optical layer-side electrode 303 comprises a large-area electrode; and the energy conversion layer is arranged in a large area across the substrate. In this case, these electrodes and the energy conversion layer are preferably transparent. The large area energy conversion layer 309 may be selectively transparent or reflective , or at least partially so, for the intended wavelengths modulated by the optical layer 310, e.g., visible light, infrared, UV, etc.

The energy conversion layer 309 is configured to convert between energy external to the substrate and a voltage difference between the substrate-side electrode 305 and the optical layer-side electrode 303.

For the energy conversion layer, various choices are possible. Interestingly, an electrode of the optical layer is used as a voltage reference for the energy conversion layer.

For example, the energy conversion layer may comprise a photovoltaic stack configured to convert light incident on the substrate to a voltage difference across the substrate-side electrode 305 and the optical layer-side electrode 303. The photovoltaic stack may be a silicon based photovoltaic stack.

For example, the energy conversion layer may comprise a thermoelectric stack configured to convert a heat difference between two sides of the substrate into the voltage difference. For example, if the light modulator is used, say in a window in a wall, where there is a temperature difference between both sides of the wall, the light modulator may use the temperature gradient and convert it into power.

For example, the energy conversion layer may comprise a radio frequency energy scavenger module configured to convert ambient RF radiation into a voltage difference. For example, ambient RF radiation may comprise Wi-Fi signals, cell phone signals, and other wireless communication signals. Like the photovoltaic stack and the thermoelectric stack, also a radio frequency energy scavenger may be arranged as a layer between the substrate-side electrode 305 and the optical layer-side electrode 303. For example, a rectifying antenna, also known as a rectenna, may be used, possibly as a meshed rectenna. For example, the rectenna may be sandwiched between electrodes 303 and 305.

The above embodiments for the energy conversion layer all convert an external energy form to a voltage difference between electrodes 303 and 305. However, the other direction is also possible. For example, the energy conversion layer may comprise one or more LEDs configured to convert the voltage difference between electrodes 303 and 305 to another energy form, in this case, to light. The LED may be a microLED, or micropatterned OLED.

Having an energy conversion layer in the light modulator is efficient since an optical side electrode may double as a voltage reference for the energy conversion layer. The generated energy may be used, e.g., to charge a battery. The generated energy may be used to power the light modulator driving system, e.g., from the battery. This has the advantage that the energy requirements of the light modulator are reduced. Yet a further advantage of the energy conversion layer in the light modulator is that the optical layer helps to dissipate thermal energy thus increasing the efficiency of the energy conversion layer. This is especially helpful if the energy conversion layer comprises a photovoltaic stack. The effect is even more pronounced if the optical layer comprises a fluid, as is typical in a range of optical layers.

Using the optical layer as a heat sink for the energy conversion layer is particularly effective for a photovoltaic stack. In an embodiment, dielectric 311 on the first substrate may be a thermally conductive material. The dielectric 311 may be arranged on the optical layer-side as shown in figure 6a. The dielectric 311 may be arranged as well between substrate 307 and substrate-side electrode 305. For example, dielectric 311 may surround the energy conversion layer. A thermally conductive dielectric 311 further reduces the temperature of the energy conversion layer. This is especially beneficial in case of a photovoltaic stack, resulting in an increase in current generated by the system.

The dielectric layer 311 on top of the optical side electrode 301 on second substrate 308 may also comprise a thermal-conductive transparent dielectric layer. This electrode may function as a heat sink for the optical layer which in turn improves the efficiency of the optical layer to function as a heat sink for the energy conversion layer 309.

A thermal connection may be arranged to the dielectric layer 311 on first substrate 307 and/or second substrate 308 to allow further dissipation from the corresponding dielectric layer 311. For example, the thermal connection may be to a frame surrounding the light modulator.

For example, the dialectric layer may have a thickness in the micrometer range, e.g., below 10um, preferably below 1um, preferably below 500nm. With this configuration, the dielectric 311 is preferably transparent or reflective for the wavelengths intended to be modulated by the optical layer 310. In the case layer 311 is reflective on the side of the energy conversion layer 309, then preferably layer 311 attached to substrate 308 is transparent or vice versa.

Optionally, a layer of a transparent high conductivity material may be applied to the substrate. For example, the layer may be applied between dielectric 311 and optical layer-side electrode 303. The layer could be applied at different places though, e.g., between the substrate and the substrate side-electrode. For example, the layer may be applied instead of dielectric 311 and optical layer-side electrode 303. The layer may comprise, for example, one or more of a layer of synthesized diamond, and aluminum nitride. Both materials are transparent and have excellent thermal conductivity. Preferably, the layer has a room temperature thermal conductivity of at least 300 W/(mK), preferably, at least 500 W/(mK).

A heat sink may be attached to the substrate-side electrode 305 of the light modulator.

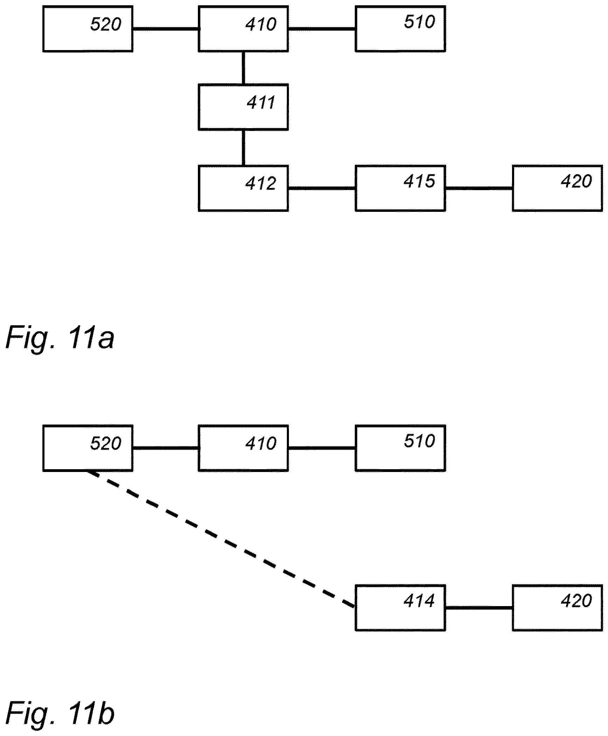

A light modulator with an energy conversion layer may be used in various ways. In one approach, the energy conversion stack is used in parallel with driving the optical layer. In this case, the optical side electrodes 305 and 301 are driven as usual in the corresponding optical layer technology. This may cause the optical side electrode 305 to change the reference voltage for the energy conversion layer 309. To avoid this the substrate-side electrode 303 is biased as much as the voltage on electrode 303 is changed. Accordingly, the energy conversion layer and the optical layer can both function as usual. A detailed embodiment for a more complicated four electrode embodiment is described below with reference to figure 11.

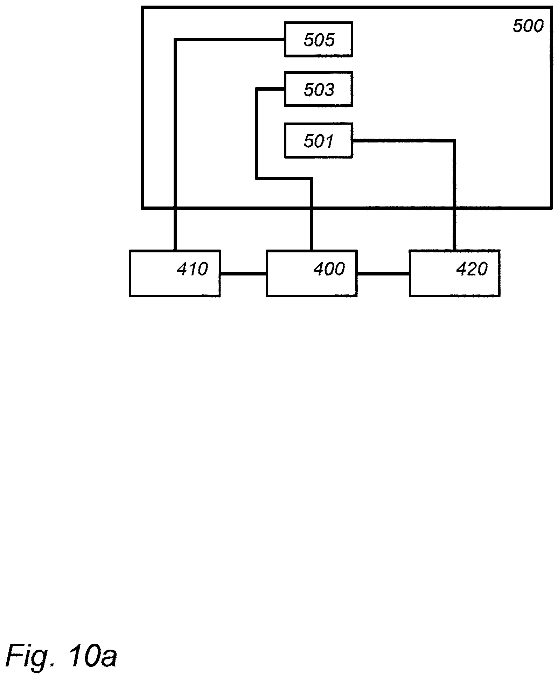

Another way to use the light modulator, which avoids the biasing step, is preferred, and is described with reference to figure 10a, etc. This approach also has the advantage that separate electrical systems may be used for optical driving and the power generation. For example, light modulator 321 may be connected to 2 different electrical systems to manage the power generation and the optical modulation. Selective connections, such as relays, may be used to connect or disconnect the shared optical side electrode on the first substrate which is used for both the photovoltaic layer and the optical modulator layer to selectively connect or disconnect to the appropriate systems, e.g., to the power generator system if energy conversion is desired, e.g., if light is shining on a photovoltaic stack in use, and to the light modulator driving system if an optical change is needed, which is not compatible with the energy conversion layer. It turns out that most optical layer changes are actually compatible, so that this exception is relatively rare.

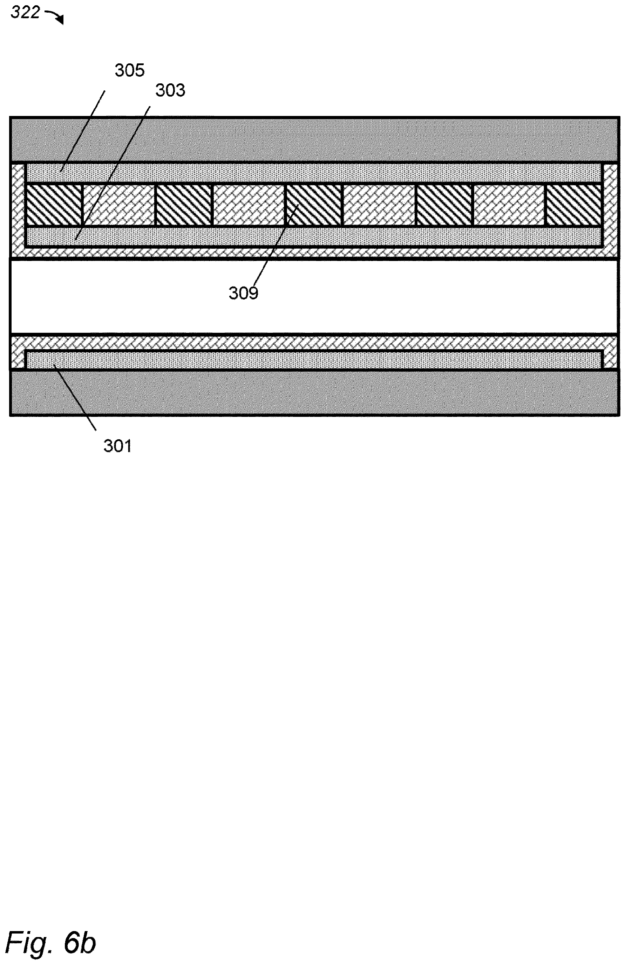

**Figure 6b** schematically shows an example of an embodiment of a two-electrode light modulator 322. Light modulator 322 is a variant of light modulator 321. Like light modulator 321, the optical layer in this embodiment may be driven with 2 electrodes. For example, suitable optical layers that may be driven in a two-electrode setup include: electrochromic, SPD, LCD, Reversible Metal Electrodeposition, and some electrophoretic systems. Like light modulator 321, electrode 303 is positioned between the energy conversion layer and the optical layer. Electrode 303 functions as a voltage reference for energy conversion layer 309 and as a driving electrode for optical layer 310.

Note that the substrate-side electrode 305 and the optical-side electrode 303 on first substrate 307 each comprise a large-area electrode. However, the energy conversion layer 309 is arranged across the substrate in multiple lines. A dielectric, which is transparent, is arranged between the multiple lines of the energy conversion layer; the dielectric is transparent. The electrodes 303, 305, and 301 are also transparent, e.g., comprising ITO or FTO.

An advantage of arranging the energy conversion layer in lines instead of as a large area is that non-transparent materials may be used for the energy conversion layer, e.g., a non-transparent photovoltaic stack.

The same options for the energy conversion layer and the optical layer as for the light modulator 321 are available in light modulator 322.

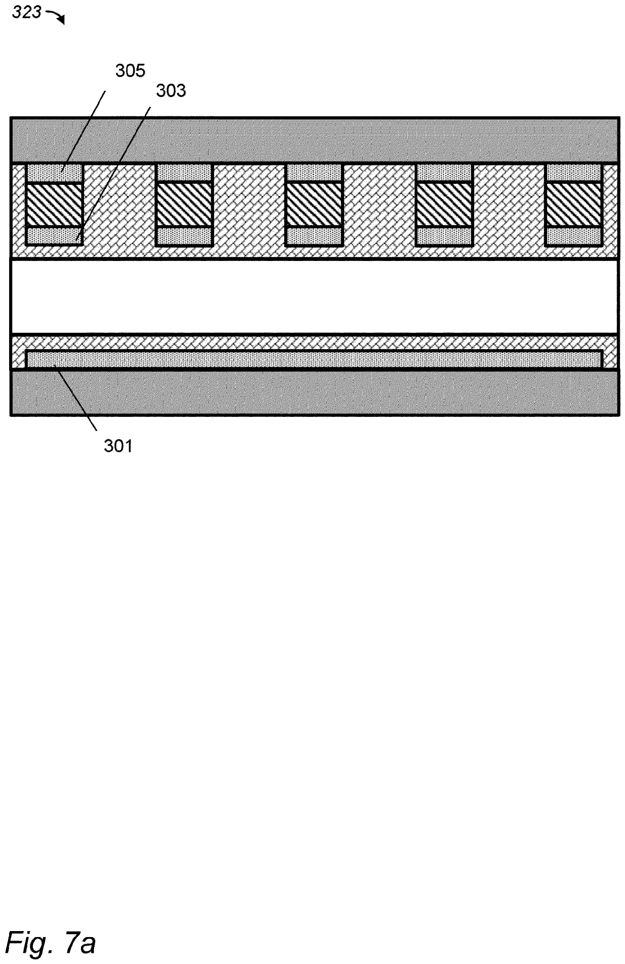

**Figure 7a** schematically shows an example of an embodiment of a two-electrode light modulator 323. Light modulator 323 is a variant of light modulator 322. The optical layer in light modulator 323 may be driven with 2 electrodes. A difference between light modulator 322 and light modulator 323 is the substrate-side electrode 305 and the optical layer-side electrode 303.1.

Like in light modulator 322, the energy conversion layer is arranged across the substrate in multiple lines, a dielectric being arranged between the multiple lines of the energy conversion layer. However, instead of a large area electrode, the electrodes on each side of the energy conversion layer are also digitated, e.g., arranged in multiple lines. Shown are electrode 303 and electrode 305 arranged in multiple lines. Accordingly, the electrode system is arranged across the substrate in multiple lines including the substrate-side electrode 305, energy conversion layer 309, and optical layer-side electrode 303. Electrodes arranged in patterns, e.g., in multiple lines, are referred to as patterned. The multiple lines do not need to be straight, but may be curved, and bifurcated, e.g., as in the examples shown in figures 2a-2f.

In this embodiment, the electrode on the other substrate, optical layer-side electrode 301 is a large area electrode. Optical layer-side electrode 301 is transparent, e.g., comprising ITO or FTO. Electrodes 303 and 305 are not necessarily transparent, though preferably, at least one of them is transparent. In an embodiment, electrode 303 and/or electrode 305 is transparent, this improves the clarity of the window; if a photovoltaic stack is used for energy conversion layer 309, then this also improves the performance of the energy conversion layer.

The multiple electrode lines in the substrate-side electrode, the energy conversion layer, and/or the optical layer-side electrode align when projected orthogonally on the substrate. This is convenient, but it is not necessary though. For example, the alignment could be partial, e.g., the projection could partially overlap. For example, the energy conversion layer could extend beyond the borders of the substrate-side electrode and/or the optical layer-side electrode. In this embodiment, the optical layer-side on the second substrate is not arranged in lines, but if it were, it could be aligned with the lines in the optical layer-side electrode of the first substrate. Again this is not necessary, but makes for more efficient operation of the optical layer.

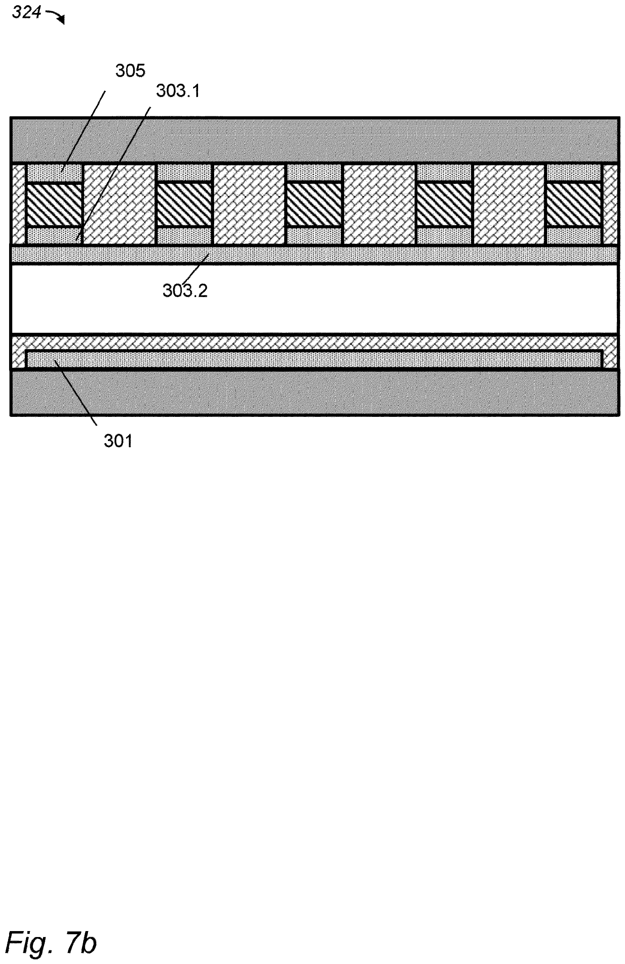

**Figure 7b** schematically shows an example of an embodiment of a two-electrode light modulator 324. Light modulator 324 is a variant of light modulator 323. The optical layer in light modulator 324 may be driven with 2 electrodes. A difference between light modulator 323 and light modulator 324 is the optical layer-side electrode.

The optical layer-side electrode comprises two layers: an electrode layer 303.1, which is arranged in multiple lines across the substrate, and a second layer which comprises a large area electrode 303.2. Layer 303.1 could be the same as the optical layer-side electrode 303 in light modulator 323.

For example, the optical layer-side electrode layer 303.2 may comprise a transparent large area electrode. The optical layer-side electrode layer 303.1 may be a non-transparent electrode. Using a combination of two layers: a non-transparent, patterned electrode and a large-area transparent electrode improves performance of the energy conversion layer, especially for a photovoltaic stack. The photovoltaic stack may be non-transparent, as it is patterned. In an embodiment, the optical layer-side electrode layer 303.1 may be reflective, typically a metal, to further improve the effectiveness of a photovoltaic stack. The patterned, reflective electrode layer 303.1 may be aligned with the energy conversion layer.

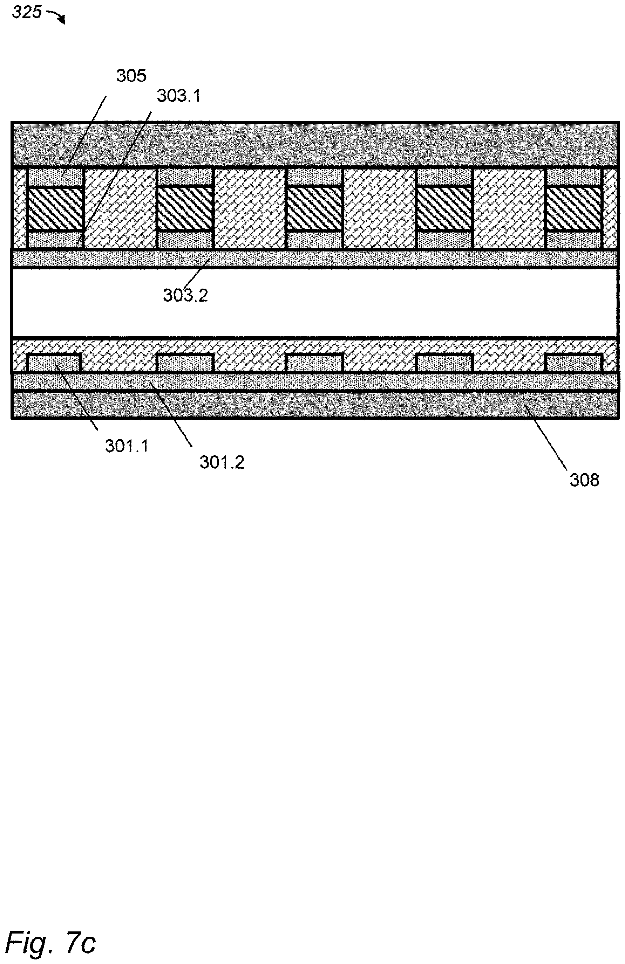

**Figure 7c** schematically shows an example of an embodiment of a two-electrode light modulator 325. Light modulator 325 is a variant of light modulator 324. The optical layer in light modulator 325 may be driven with 2 electrodes. A difference between light modulator 325 and light modulator 324 is the optical layer-side electrode on the second substrate 308.

The optical layer-side electrode comprises two layers: an electrode layer 301.1, which is arranged in multiple lines across the substrate, and a second layer which comprises a large area electrode 301.2. For example, patterned electrode layer 301.1 may be non-transparent, typically a metal, and large area electrode 301.2 may be transparent. This arrangement allows effective driving of the optical layer, especially for an electrochromic optical layer by increasing the electrons distribution for the electrochromic effect causing the "iris effect" as described in US2021/0149265 A1 included herein by reference. This is particularly interesting for large devices.

Substrate-side electrode 305 may be a patterned non-transparent electrode, typically metal, or it may be patterned ITO, or FTO. The energy conversion layer may be patterned

The lines in the electrode layer 301.1 do not need to be aligned with those in optical layer-side 303.1.

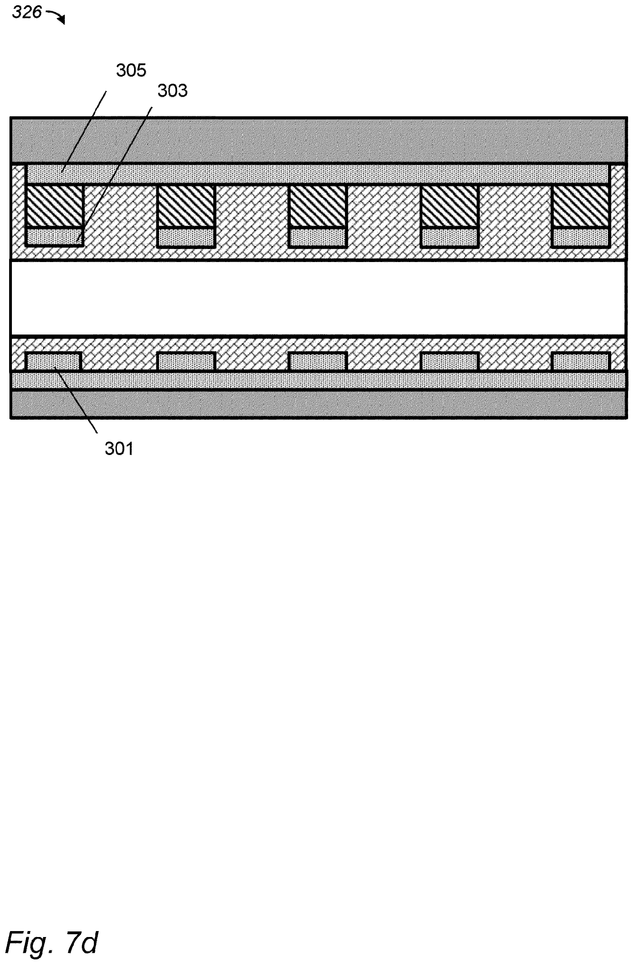

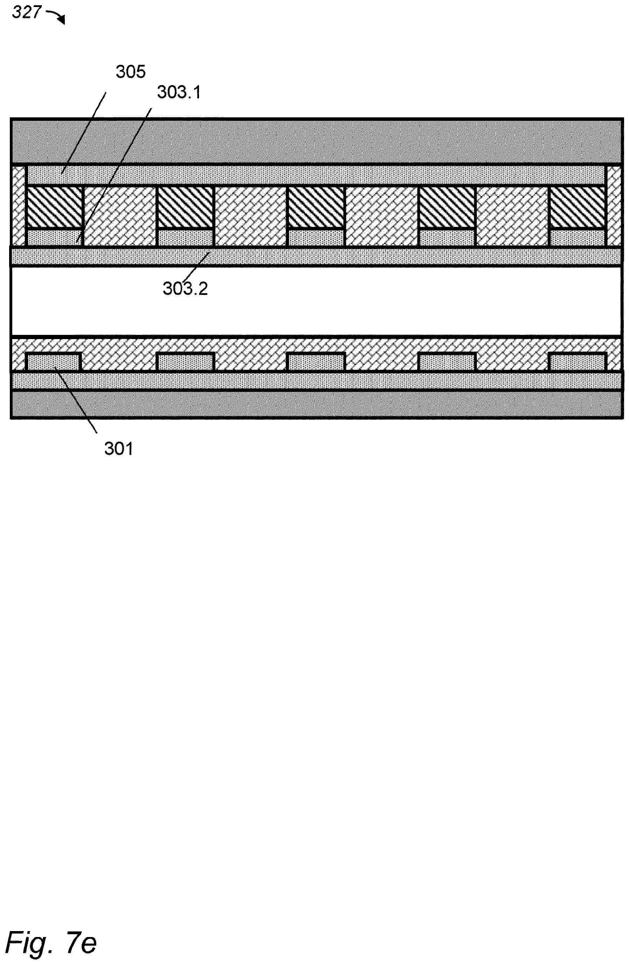

**Figure 7d** schematically shows an example of an embodiment of a two-electrode light modulator 326. Light modulator 326 uses the second substrate of light modulator 325. While the first substrate is similar to light modulator 322 and 323. Substrate-side electrode 326 comprises a transparent, large area electrode. The energy conversion layer 309 and the optical layer-side electrode 303 are arranged in lines. Typically, these lines align, or at least partially so. Figure 7e schematically shows an example of an embodiment of a two-electrode light modulator 327. Light modulator 327 is similar to light modulator 326 but in this case, the optical layer-side electrode is arranged in two layers, as in light modulator 324 and 325.

The first substrate in figure 7d could be manufactured with the following method

- providing a transparent substrate (307),
- applying a substrate-side electrically conducting layer to the substrate,
- applying a photovoltaic stack layer to the substrate,
- applying an optical layer-side layer electrically conducting layer to the substrate,
- patterning a resist layer on the optical layer-side layer, the resist layer comprising a pattern of the at least one electrode system,
- transferring a resist pattern onto the optical layer-side layer, exposing the underlying areas where the electrode system will be formed,
- removing the exposed areas of the conducting layer,
- applying a dielectric coating to the substrate.

By adding further elements to this method the other substrates shown herein can also be formed. For example, patterning a resist layer may be introduced between the forming of the other electrodes. A different patterning may provide multiple electrodes.

**Figure 7e** schematically shows an example of an embodiment of a two-electrode light modulator 327. Light modulator 327 is similar to light modulator 326 but in this case, the optical layer-side electrode is arranged in two layers, as in light modulator 324 and 325.

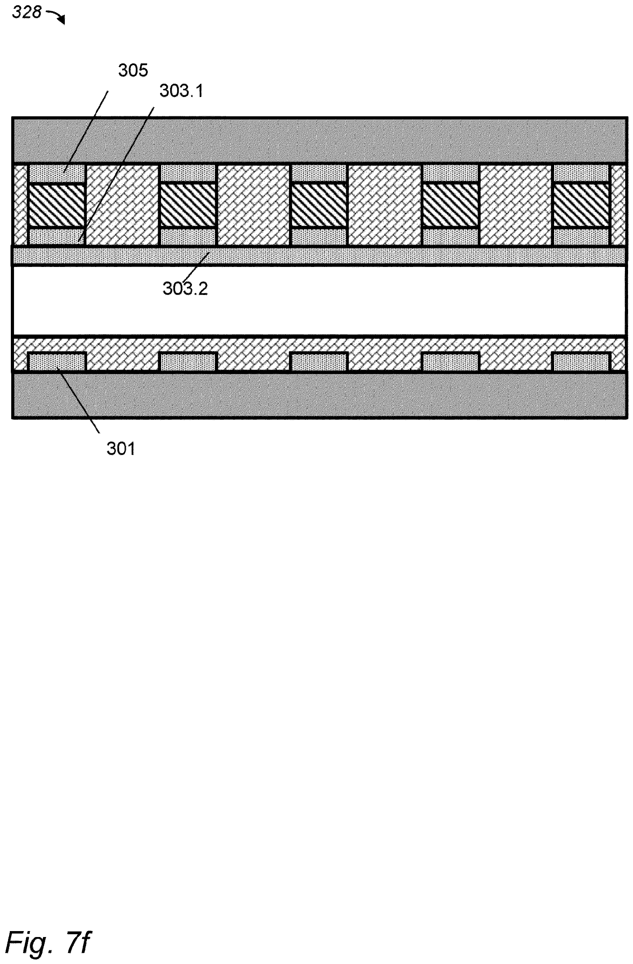

**Figure 7f** schematically shows an example of an embodiment of a two-electrode light modulator 328. In light modulator 328, the substrate-side electrode 305 is arranged in multiple lines, as is the energy conversion layer 309. The optical layer-side electrode on the first substrate comprises two layers, e.g., as in light modulators 324, 325, and 327. The optical layer-side electrode on the second substrate comprises only one layer in this example, but is digitated, e.g., arranged in multiple lines.

Accordingly, in this embodiment, the optical layer can be driven with 1 non-transparent patterned electrode (301) and 1 transparent electrode (303.2). Electrode 301 is a patterned electrode. Electrode 305 is patterned and transparent, e.g., ITO or FTO. Electrode 303 is a combination of a transparent electrode, e.g., ITO for the optical modulator, and patterned electrode to improve performance of the energy conversion layer, e.g., comprising reflective metal.

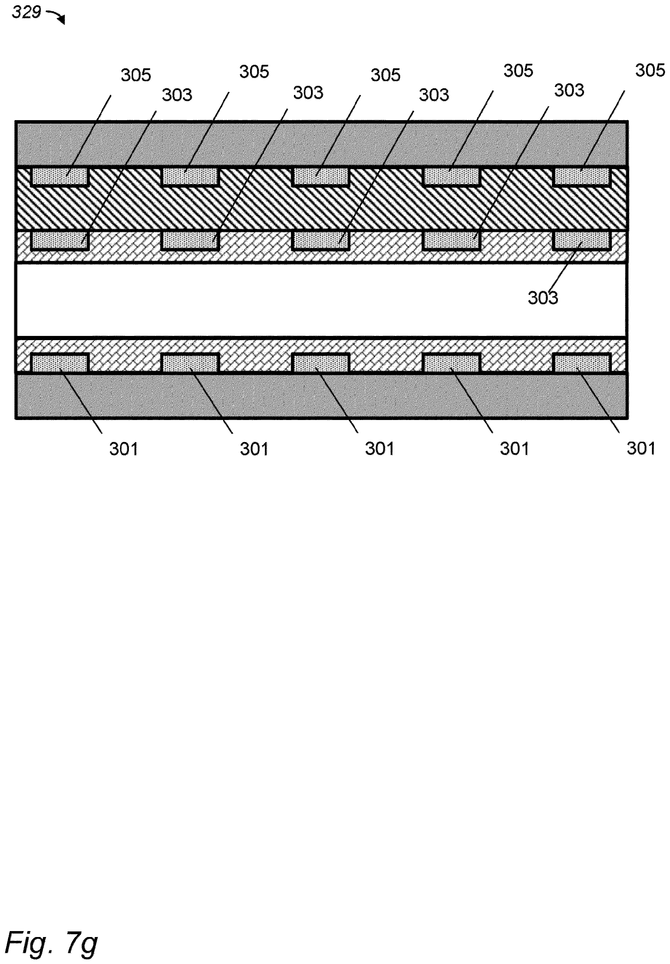

**Figure 7g** schematically shows an example of an embodiment of a two-electrode light modulator 329. In light modulator 329, the energy conversion layer, e.g., a photovoltaic stack, is arranged in a large area across the substrate. Using a large area energy conversion layer increases the efficiency of the energy conversion layer. The energy conversion layer is transparent.

A single substrate-side electrode 305 is arranged across the substrate in multiple lines. Electrode 305 may be a metal. A single optical layer-side electrode 303 is arranged across the substrate in multiple lines. A digitated optical layer-side electrode 301 is applied to the second substrate. All electrodes 303, 305, 301 may be non-transparent, e.g., metal. In an embodiment, electrode 305 is transparent, however, e.g., patterned ITO or FTO.

Figures 7a-7g describe several variants of two-electrode light modulators that utilize different configurations of electrodes, energy conversion layers, and optical layers to achieve improved performance in various applications. These configurations enable driving of the optical layer and enhanced energy conversion, e.g., for photovoltaic stacks. The embodiments provide flexibility in the choice of transparent or non-transparent electrodes, patterned or large-area electrodes, and alignment between the energy conversion layers and electrodes, allowing for the optimization of the light modulator's performance according to specific requirements.

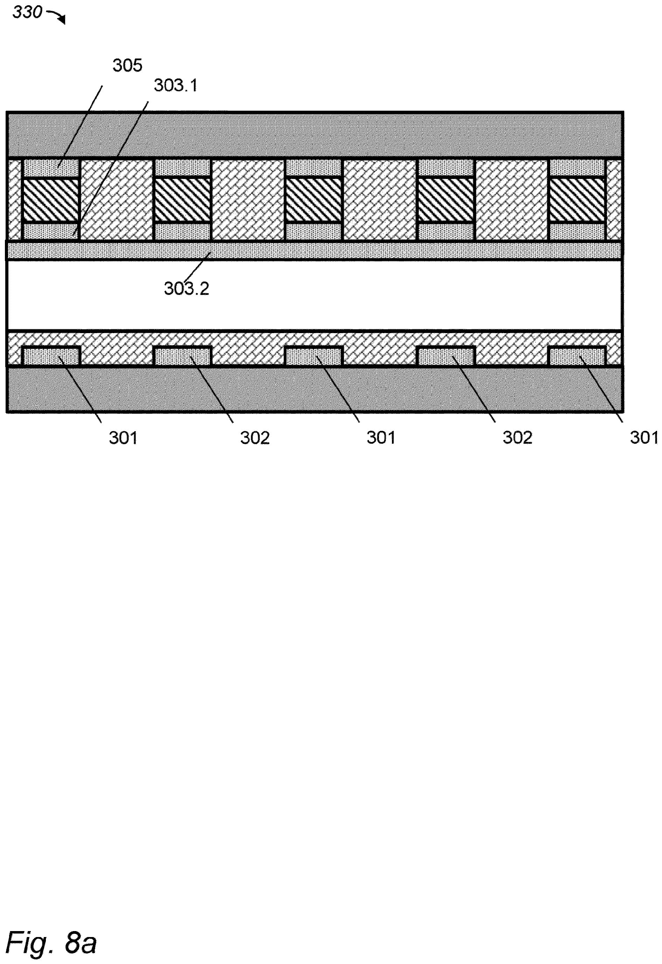

**Figure 8a** schematically shows an example of an embodiment of a three-electrode light modulator 330. Light modulator 330 is similar to two-electrode light modulator 328 in Figure 7f, except that on the second substrate two interdigitated optical layer-side electrodes 301 and 302 are applied. Accordingly, there are three electrodes that may be used to drive various electric fields in the optical layer. The large area electrode layer 303.2 is transparent. The patterned electrodes 301, 302 may be non-transparent, e.g., metal. Preferably, electrode 305 is transparent, e.g., patterned ITO or FTO.

This arrangement is especially suitable for e-ink type optical layers, e.g., electrophoretic or dielectrophoretic systems, preferably electrophoretic.

For example, electrodes 301, 302 may be connected to an optical modulator drive system. Electrode 303 may be selectively connected to a power generation system or to an optical modulator drive system, or to both. Electrode 305 is connected to the power generation system. Electrode 303 is shared between the energy conversion layer and the optical layer.

The light modulator 729 may also be modified to a three-electrode light modulator, by similarly replacing the single electrode 301 on the second substrate with two interdigitated electrodes.

Further control over the optical layer may be obtained by further increasing the number of electrodes, e.g., to three optical layer-side electrodes or more. This can be done at either the second substrate, the first substrate, or both. For example, a 1-3, 2-3, 3-3, electrode design, for the number of optical layer-side electrodes on the respective first and second substrates is possible.

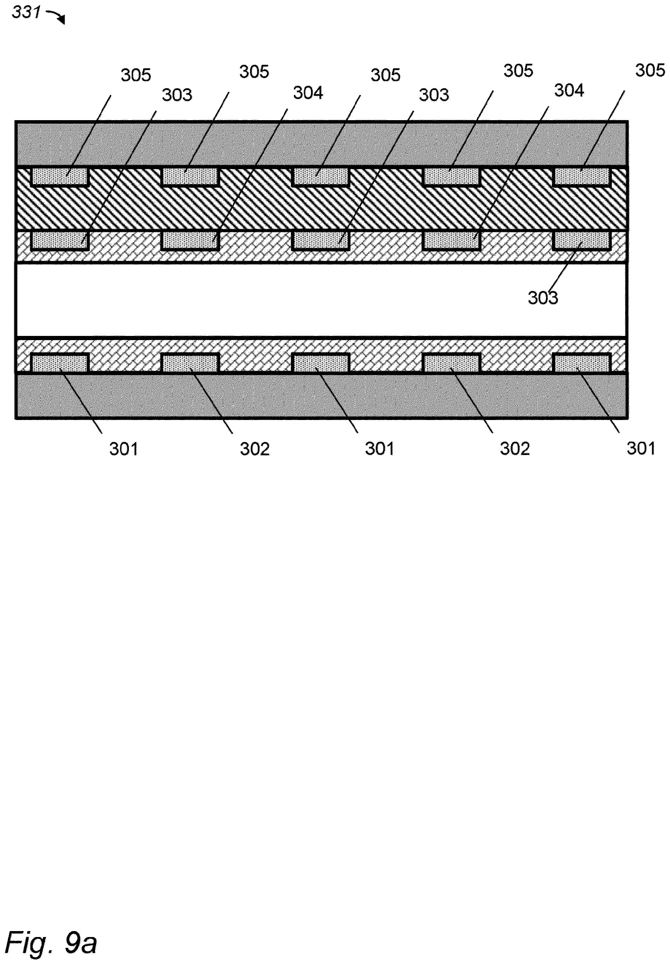

**Figure 9a** schematically shows an example of an embodiment of a four-electrode light modulator 331. Light modulator 331 is similar to light modulator 329, shown in Figure 7g. The first substrate of light modulator 331 has a single digitated substrate-side electrode 305, and two optical layer-side electrodes: electrodes 303 and 304. Electrodes 303 and 304 are interdigitated. The second substrate has two optical layer-side electrodes: electrodes 301 and 302. Electrodes 301 and 302 are also interdigitated. This arrangement is especially suitable for e-ink type optical layers, e.g., electrophoretic or dielectrophoretic systems, preferably electrophoretic.

Electrodes 301, 302, 303, and 304 are patterned, and may be non-transparent. For example, these electrodes may be metal. Electrode 305 may be transparent, e.g., patterned ITO or FTO. The energy conversion layer is of large-area type and is transparent; the energy conversion layer may be a photovoltaic stack.

For example, electrodes 301, 302 may be connected to an optical modulator drive system. Electrodes 303 and 304 may be selectively connected to a power generation system or to an optical modulator drive system, or to both. Electrode 305 is connected to the power generation system. Electrode 303 is shared between the energy conversion layer and the optical layer.

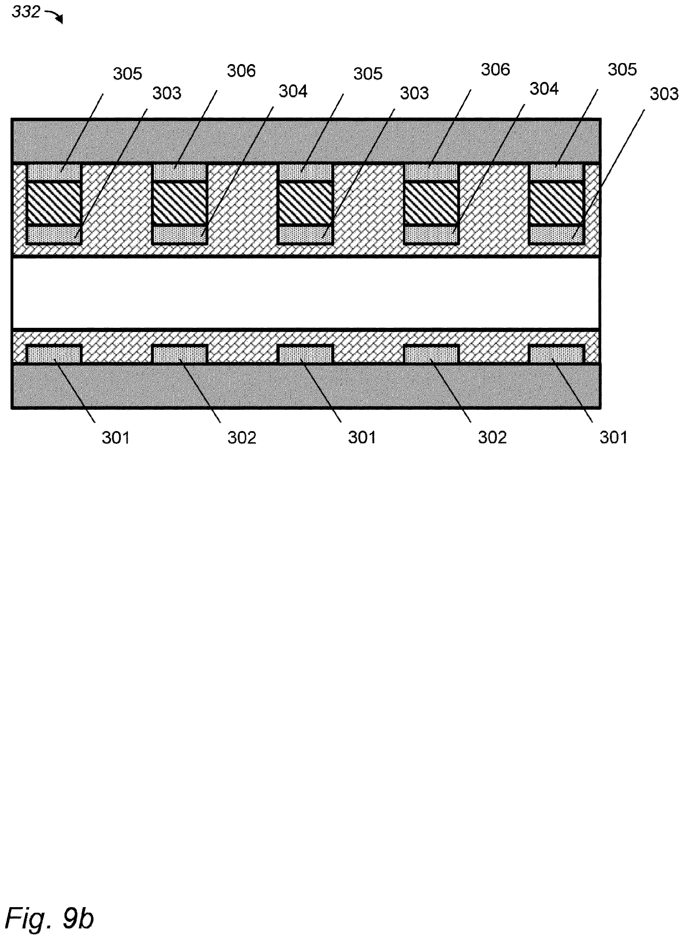

**Figure 9b** schematically shows an example of an embodiment of a four-electrode light modulator 332. Light modulator 332 is similar to light modulator 323, shown in Figure 7a, except for the electrodes.

Light modulator 332 has two interdigitated substrate-side electrodes: electrodes 305 and 306. Light modulator 332 has two interdigitated optical layer-side electrodes: electrodes 303 and 304. The energy conversion layer is arranged in multiple lines across the substrate that align, at least partially, with the substrate-side electrodes and the optical layer-side electrodes. The lines are separated from each other by a dielectric. The second substrate has two interdigitated optical layer-side electrodes: electrodes 301 and 302. Preferable electrodes 305, 306, 307, 308 are transparent like ITO to get more light in, and generate more electricity.

Light modulator 332 may be used with a selective connection system that selectively connects or disconnects the shared optical layer-side electrodes 303 and 304 to a power generation system, to a light modulator driving system, or to both. Substrate layer-side electrodes 305 and 306 may be connected to the power generation system.

One way to use the multiple substrate-side electrodes is to support multiple types of energy conversion layers. For example, between electrodes 305 and 301, there may be a first type of energy layer, while between electrodes 306 and 302, there may be a second type of energy layer. The electrodes 305 and 306 may connect to separate power generation systems. Each connection to a power generation systems may have a blocking diode. Accordingly, in this example, multiple energy conversion layers of one or more different types, are combined with one optical layer. More optical layers may be added, e.g., by adding an additional substrate. More energy conversion layers may be added, either on the top substrate, on the bottom substrate, or on an additional substrate.

For example, while driving to closing with horizontal fields, electrodes 303-304 are disconnected from system photovoltaic stack with relays and on the other side relays to connect 303-304 on light modulator system are on. Diodes are placed at electrodes 305, 306 to prevent flow of electrodes with the wrong sign. It is possible to get symmetrical photovoltaic stack on each side when further substrate-side electrodes 314 and 315 are also connected to photovoltaic stack system.

Interestingly, light modulator 332 may be used without a selective connection system. For example, the substrate-side electrodes 305 and 306 may be biased so that the voltage difference over the energy conversion layer, as well as the voltage difference over the optical layer is correct.

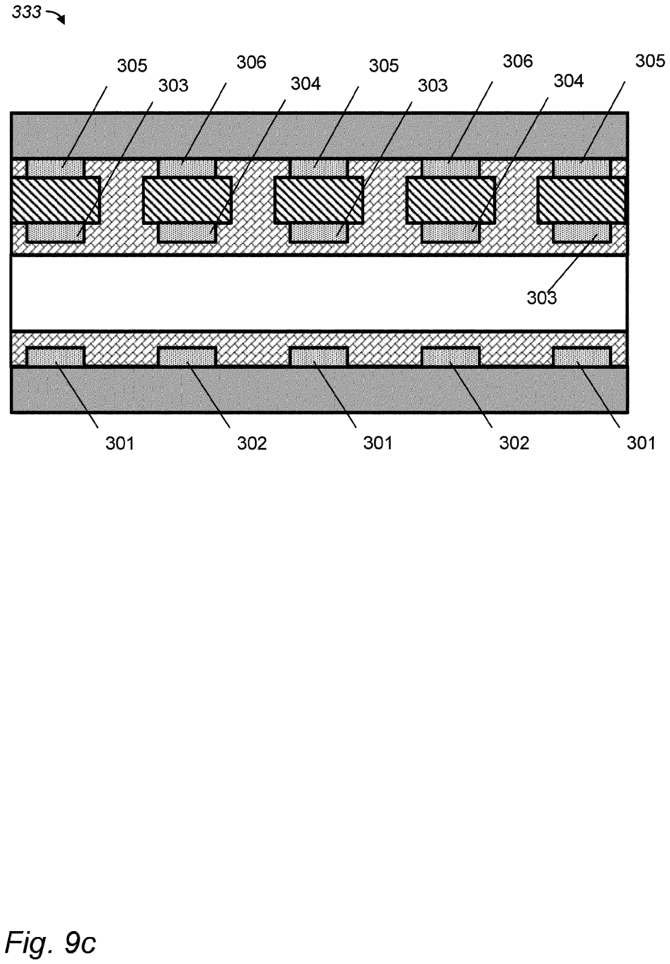

**Figure 9c** schematically shows an example of an embodiment of a four-electrode light modulator 333. Light modulator 333 is similar to light modulator 332. In this example, the energy conversion layer is arranged in multiple lines, separated by a dielectric, but the multiple lines extend beyond the border of the electrodes. This will increase the efficiency of the energy conversion layer. If the energy conversion layer is transparent, or more transparent than the electrodes, this will not greatly reduce transparency of the panel. Extending energy conversion layer lines beyond the border of the electrodes may be applied in other light modulator designs that use energy conversion layer lines.

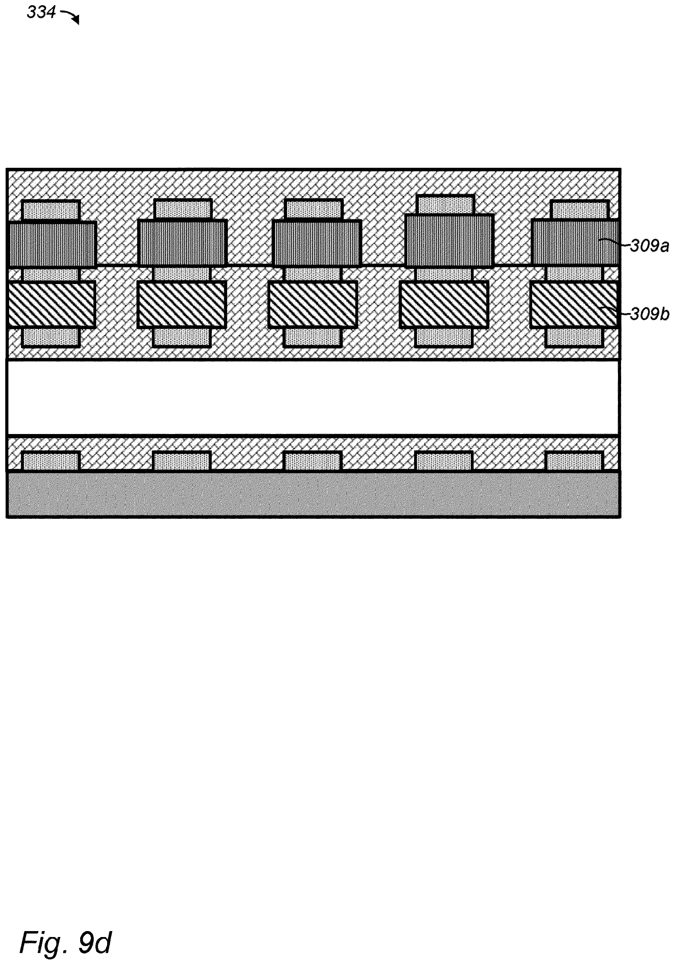

In an embodiment, of a transparent substrate for use in a light modulator, the electrode system comprising a stack of one or more of a pair of a substrate-side electrode and an energy conversion layer, followed by an optical layer-side electrode. In an embodiment, the multiple energy conversion layers are of different type. For example, **Figure 9d** schematically shows an example of an embodiment of a four-electrode light modulator 334. The light modulator is similar to the one shown in figure 9c, except that two energy conversion layers are used. Shown are layers 309a and 309b. The layers are vertically stacked. Multiple energy conversion layers may be applied in other light modulator substrates as well.

For example, there may be two different types of conversion layers, e.g., type A and type B, which operate at different wave lengths within the light spectrum. For example, each may be photovoltaic stack, but one photovoltaic stack may operate in the visible spectrum of light, while the other may operate in UV, or infrared. This stacking would provide an increase in the amount of energy extracted/converted to useful electrical energy.

Although the increased complexity of the overall structure is a disadvantage, the additional energy that is gained is an advantage. In an embodiment, a light modulator having stacked energy conversion layers does not have a connection to the grid. For example, this may remove the requirement for adding wiring to the window to supply incremental electrical energy. This is a significant advantage since additional wiring represent additional installation cost.

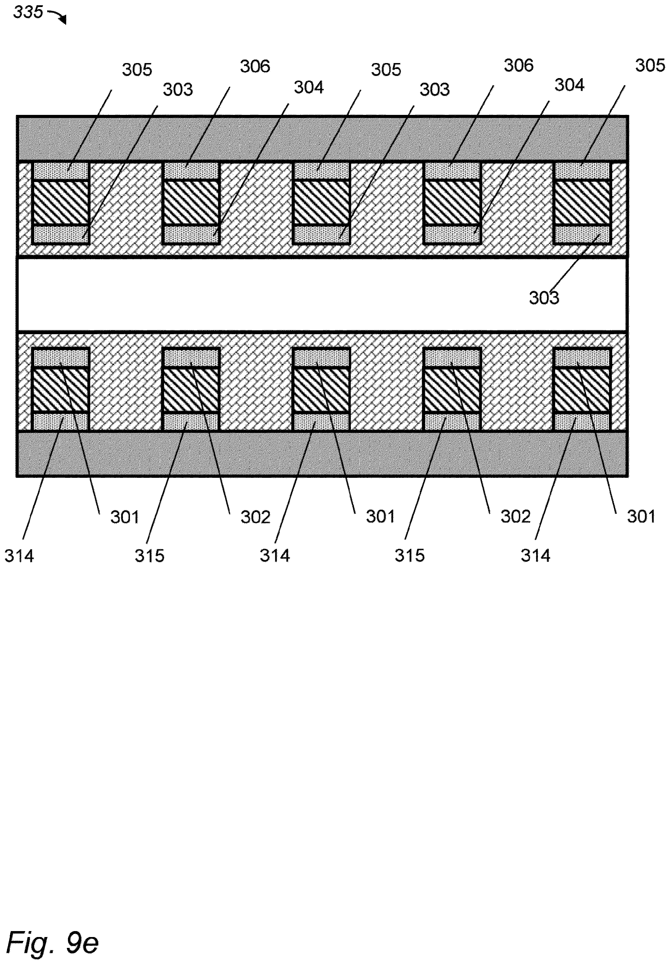

**Figure 9e** schematically shows an example of an embodiment of a four-electrode light modulator 335. Light modulator 335 is similar to light modulator 332, except that the second substrate is also implemented according to an embodiment. In this case, the electrode design for the second substrate is the same as for the first substrate.

For example, the second substrate has two interdigitated substrate-side electrodes: electrodes 314 and 315, and two interdigitated optical layer-side electrodes: electrodes 301 and 302. An energy conversion layer is arranged between them, in multiple lines across the substrate that align, at least partially, with the substrate-side electrodes and the optical layer-side electrodes. The lines are separated from each other by a dielectric.

For example, in the shown embodiment, electrodes 301, 302, 303, 304 may be patterned, non-transparent electrodes, typically metal. Electrodes 305, 306, 314, 315 may be patterned ITO. The energy conversion layer may be non-transparent and patterned. The energy conversion layer may be a photovoltaic stack.

However, any of the designs for a first substrate may be applied to a second substrate as well. To drive a panel, a selective connection system may be applied to the joint electrode(s) 301 and 302, or the electrodes 314 and 315 may be biased.

In this example, two energy conversion stacks are combined with a single optical modulator. This is quite advantageous in the case of energy conversion stacks made of solid-state materials and an optical layer comprising liquids, e.g., e-ink based optical layers. The two energy conversion stacks may be of the same or of a different kind. For example, it could combine a photovoltaic stack and microLED stack combined with an electrophoretic optical modulator stack. In the case of an additional microLED stack, electrodes of the microLED stack can be configured in rows and columns to gain addressable pictures and generate an image. Additional local capacitors may be integrated for displays, e.g., in an active matrix configuration, to improve the performance and stability of the display.

In the case of associating 2 energy conversion stacks with an optical modulator, the 2 energy conversion stacks will be connected to 2 separated systems or to a single one if of the same kind or compatible.

**Figure 10a** schematically shows an example of an embodiment of a two-electrode light modulator system 500.

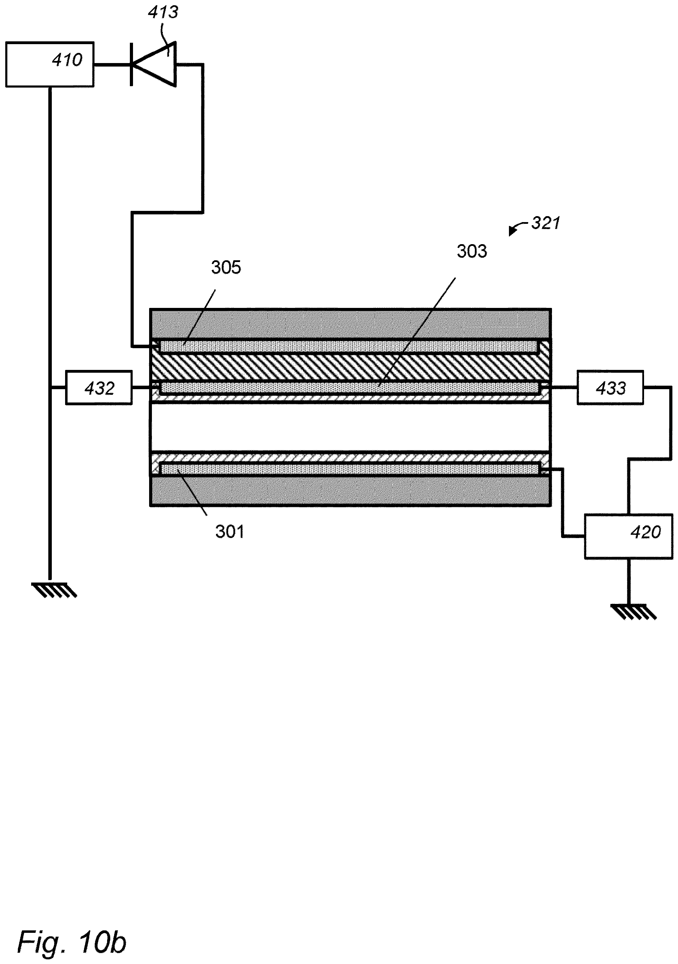

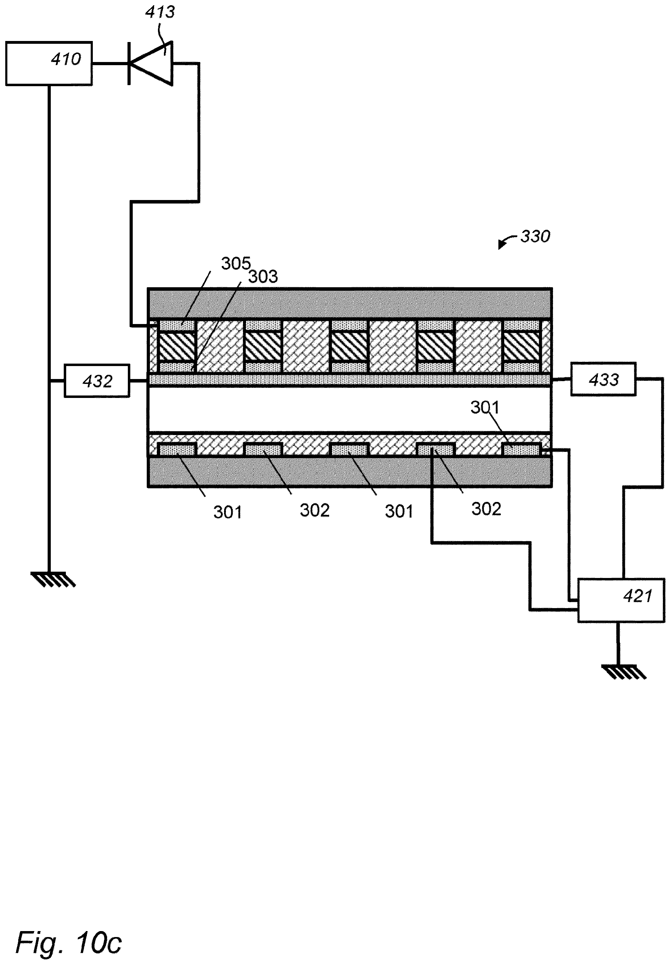

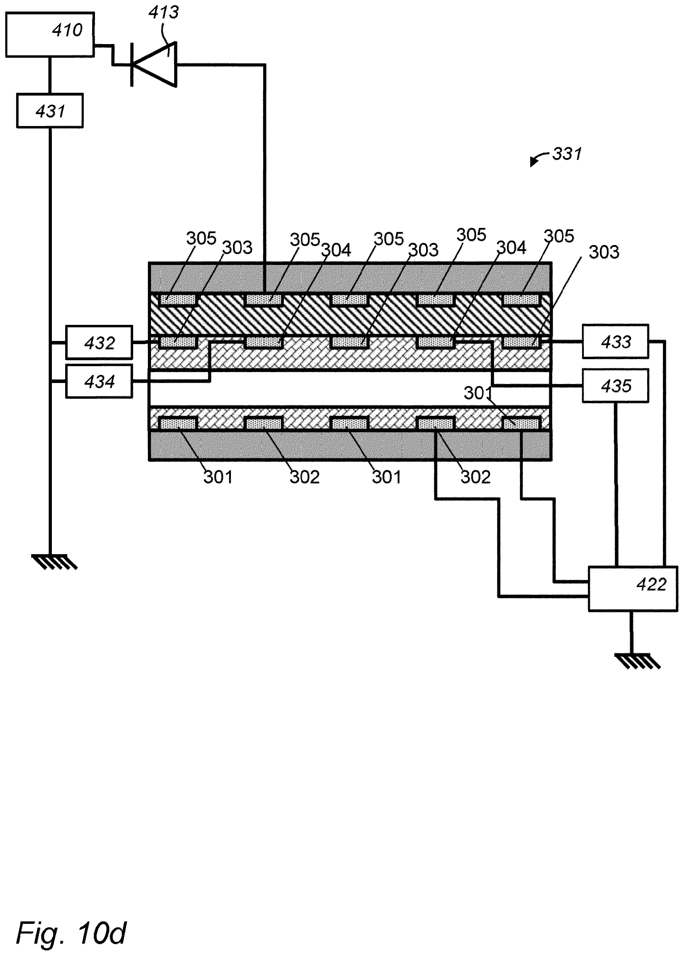

Shown in figure 10 is a light modulator 500, e.g., according to any of the embodiments shown herein. Light modulator 500 comprises a substrate-side electrode 505, optical layer-side electrode 503, optical layer-side electrode 501. Light modulator 500 may comprise an energy conversion layer between electrodes 505 and 503, and an optical layer between electrodes 503 and 501 (neither shown separately in figure 10a). Any of the electrodes 501, 503, and 505 may be a single electrode or multiple, interdigitated electrodes. The electrode 503 is used both by the energy conversion layer, as well as by the optical layer. A power generation system 410 may be connected to substrate-side electrode 505. A light modulator drive system 420 may be connected to optical layer-side electrode 501. The joint electrode 303 is connected to a selective connection system 400.

In an embodiment, selective connection system 400 may be configured to connect electrode 503 to both the power generation system and the light modulator drive system, or to only the light modulator drive system. The latter may be used if the light modulator drive system needs to arrange a voltage on electrode 503 that is incompatible with the power generation system, in particular lateral electric fields in the optical modulator.

In an embodiment, the selective connection system may be configured to connect electrode 503 only to the power generation system.

In the arrangement shown in figure 10a, it is assumed there is only one energy conversion layer. There may be another energy conversion layer between electrodes 501 and a further substrate-side electrode; in that case, the electrode 501 is also connected to a selective connection system. The further substrate-side electrode may be connected to the power generation system.

Power generation system 410 may charge a battery. For example, power generation system 410 may comprise a battery charger configured to regulate the voltage to provide the battery with the correct charging voltage. The charger may further limit the current flow to the battery to prevent overcharging or overheating, which can damage the battery. To avoid that the energy conversion layer draws power from the battery, the charger may have a built-in diode to prevent reverse current flow.

A battery is optional. The power generation system may release the electricity to the electrical grid.

The power generation system may power a device directly from the energy conversion layer, in particular the light modulator drive system. For example, the power generation system may comprise a voltage regulator to ensure a stable and regulated voltage output. For example, the voltage regulator may be a linear voltage regulator or a switching voltage regulator. An optional blocking diode may be added to prevent discharging of power back into the energy conversion layer, e.g., a solar panel during low light conditions or at night. The diode may be added between the energy conversion layer and the voltage regulator. The light modulator drive system may also or instead get power from a battery charged by the power generation system. The light modulator drive system may also or instead get power from the grid.

The energy conversion layer may be a photovoltaic stack, e.g., a silicon-based stack. The light modulator drive system may be a conventional drive system, appropriate for the chosen optical layer. For example, it may be an electrophoretic drive system.

Combining an energy conversion layer, in particular a photovoltaic stack, and an optical modulator is efficient, as electrodes needed for the light modulator can be used for the energy conversion layer as well. A patterned energy conversion layer, e.g., photovoltaic stack, may be used to enable standard photovoltaic technology, which is efficient. The light modulator may be connected to 2 electronic systems: for power generation, and for optical modulator drive.

**Figure 10b** schematically shows an example of an embodiment of a two-electrode light modulator system, in this case based on light modulator 321 shown in Figure 6a. Figure 10b illustrates an embodiment of a two-electrode light modulator with selective connections to manage the energy conversion and optical modulation separately. Also shown is a power generation system 410 and a light modulator drive system 420. A blocking diode 413 is inserted to avoid discharge from the power generation system 410 to the light modulator 321.

The selective connection system may comprise a set of switches or relays that can be controlled to connect or disconnect the shared optical layer-side electrode 303 to different electrical systems, depending on the desired operation. In one configuration, the shared electrode 303 is connected to a power generation system when energy conversion is the primary goal, such as when sunlight is shining on a photovoltaic stack integrated into the energy conversion layer 309. In another configuration, the shared electrode 303 is connected to a light modulator driving system when an optical change is required that is not compatible with the energy conversion layer.

In most cases, the optical layer changes and energy conversion can operate simultaneously and without interference, there is no need for a selective connection system. Thus, the shared electrode 303 is preferably connected to both electrical systems.

Nevertheless, a selective connection system may be useful, e.g. to drive the optical layer at higher voltages than is desirable for the energy conversion layer.

The optional selective connection system comprises selective connections: 432, and 433.

To connect the light modulator drive system, but not the power generation system, connections 432 is open, and connection 433 is closed. This mode may be used to drive the optical layer harder

To connect both the light modulator drive system and the power generation system, connections 432, and 433 are closed. The latter is the usual situation. An additional selective connection may be added, e.g., connection 431 as in figure 10d, for further separation.

**Figure 10c** schematically shows an example of an embodiment of a three-electrode light modulator system, in this case based on light modulator 330 shown in Figure 8a. Figure 10c illustrates an embodiment of a three-electrode light modulator with selective connections to manage the energy conversion and optical modulation separately. A three-electrode drive system 421 is used in this embodiment.

The design is similar to the one shown in Figure 10b except that the light modulator drive system 421 receives an additional connection to an electrode on the second substrate. This design may be used for an e-ink light modulator, e.g., an electrophoretic and/or dielectrophoretic light modulator.

The fluid in the optical layer helps with heat dissipation from the energy conversion layer, and thus increases its performance, especially for a photovoltaic stack.

Interestingly, the e-ink may comprise phosphorescent or fluorescent pigments to boost the electricity generation by a photovoltaic stack.

The light modulation drive system may apply adequate potentials, DC or AC, depending on the chosen light modulator technology. It can operate the light modulator from dark to clear and from clear to dark.

Like figure 10b, the light modulator of figure 10c can operate without the selective connections. An optical selective connection system with two selective connections 432, and 433 is shown.

In figures 10b and 10c the connection system is optional. One could provide a fixed connection from the optical layer-side electrode 303 to both the power generating system and the light modulator driving system. Having a connection system allows one to disable either one of the power generation system or the light modulator system as desired.

**Figure 10d** schematically shows an example of an embodiment of a four-electrode light modulator system. This example uses light modulator 331, shown in Figure 9a. A four-electrode light modulator drive system 422 is used in this embodiment.

The substrate-side electrode 305 is connected to power generation system 410; substrate-side electrode 305 is not connected to drive system 422. In this example, there is only one substrate-side electrode.

Two interdigitated optical layer-side electrodes: electrodes 303 and 304, are used on the first substrate. The electrodes 303 and 304 are connected to power generator system 410 as a voltage reference through selective connections 432 and 434, respectively. The other end of selective connections 432 and 434 is connected through selective connection 431 to power generator system 410.

The electrodes 303 and 304 are connected to light modulator drive system 422 through selective connections 433 and 435, respectively.

Two interdigitated optical layer-side electrodes: electrodes 301 and 302, are used on the second substrate. They are also connected to light modulator drive system 422.

A selective connection may be implemented, e.g., by a mechanical relay, a monostable relay, a transistor switch, etc.

Various modes of operation are supported by the light modulator system of Figure 10d.


**Horizontal drive**


Horizontal drive is a mode in which lateral electric fields are created along the substrate. Light modulator 422 may apply alternating voltage on the interdigitated electrodes to cause the particles in the optical layer to move parallel to the substrate, thus decreasing transparency. Selective connections 432, 434, and 431 are open; selective connections 433 and 435 are closed. The power generation system 410 does not work while in horizontal drive. The driving electrodes 304 and 305 are disconnected from ground during horizontal drive.

**Vertical drive**

Vertical drive is a mode in which particles are aligned orthogonally to the substrates. Electrodes opposite to each other on opposite substrates receive a different voltage. Selective connections 431, 432, and 434 are closed. Selective connections 433 and 435 are open. This connects electrodes 304 and 303 to the ground. Light modulator drive system controls a voltage on electrodes 301 and 302 to cause the particles in the optical layer to align vertically. The power generation system 410 is powered by voltage difference created by the energy conversion layer.

**Maintaining a gray scale**

To maintain a particular gray scale, the same connection configuration as in vertical drive may be used. The light modulator drive system 422 applies 0 voltage on 301 and 302 most of the time, but if the gray scale is dropping, due to the particles dispersing, then briefly electrodes 301 and 302 may be driven. In this situation, the power generation system may be active.
In all three modes, the driving may use DC or AC signals. Preferably, AC signals are used.
The selective connection system 400, e.g., selective connections 431, 432, 433, in figures 10a-d may be controlled by controller, e.g., controller 16. The controller may be associated with the optical light modulator drive system.
**Figure 11a** schematically shows an example of an embodiment of a power generator system.
**Figure 11b** schematically shows an example of an embodiment of a power generator system.
Two example uses of the energy conversion layer 510 and power generation system 410 are shown in Figures 11a and 11b. Power generation system 410 obtains energy from the energy conversion layer 510, e.g., a photovoltaic stack, and converts this to usable energy.
Figure 11a shows a charger 411 and a battery 412. Charger 411 is configured to charge battery 412. Surplus energy may be channeled to the grid 520, e.g., a 230V AC grid. A voltage converter 415 is arranged between battery 412 and light modulator drive system 420.
Charger 411 may be part of system 41. System 510 may comprise a power grid converter to deliver the solar power back to grid 520. Battery 412 and/or voltage converter 421 may be in system 410, or in system 420 or in neither. The voltage converter allows varying input level voltages. System 410 may comprise a DC converter for external equipment, such as system 420, and a DC/AC converter to give energy back to the power grid.
Figure 11b is similar except that no battery is used. System 410 is arranged to convert the energy from layer 510 and deliver it to grid 520. The light modulator is powered using wall plug 414, e.g., with grid power.
These embodiments illustrate the flexibility and adaptability of the light modulator systems, allowing for energy conversion and optical modulation to occur simultaneously or independently as needed. The different configurations and selective connections provide opportunities for various applications and uses. Embodiments described for two-, three-, and four-electrode light modulator systems demonstrate a range of possibilities for managing energy conversion and optical modulation. These systems can be used in energy-generating windows, smart glass, displays, and other technologies where energy conversion and optical properties need to be managed effectively and efficiently.

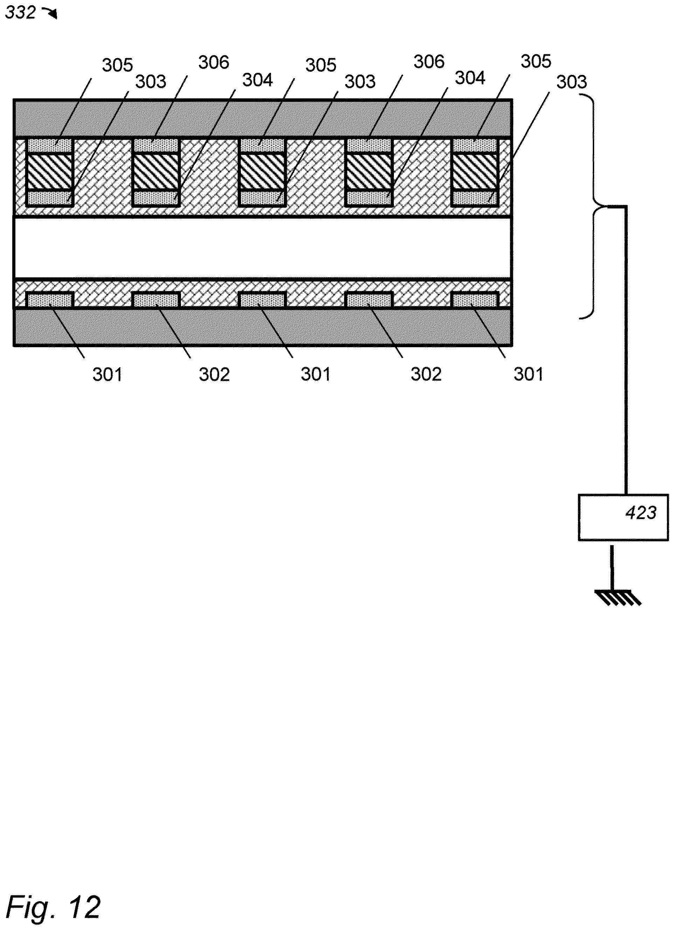

**Figure 12** schematically shows an example of a controlling method for a four-electrode light modulator system. The light modulator system shown in Figure 12 does not use a selective connection system. In this embodiment, there are as many substrate-side electrodes on the first substrate as there are optical layer-side electrodes; in the depicted situation, these comprise 2 electrodes each. This embodiment uses light modulator 332 from Figure 9a.
All electrodes 301-306 are connected to the light modulator drive system 423. Light modulator drive system 423 is configured to bias electrodes to allow horizontal drive while the energy conversion layer is operating. Power generation, e.g., charging a battery or the like, is done by light modulator drive system 423 in this case.
The electrodes of the light modulator are patterned, as well as the energy conversion layer. In an embodiment, the energy conversion layer is a photovoltaic stack, which may also be patterned, especially if the photovoltaic stack is not sufficiently transparent. Below, it is assumed the energy conversion layer is a photovoltaic stack, though it may be modified to something else as shown herein.
When the sun hits the first substrate of the device, electrons are generated at electrodes 303, 304, 305, and 306. This creates a potential difference between these electrodes.
If the light modulator is not operating or driven: the generated potential fluctuates depending on solar exposure. The electricity generated can be routed to a battery or the grid. The potential between electrodes 1 and 3 may be kept at null. Therefore, the light modulator drive system may measure the potential of electrode 303 versus electrode 301, and adjust the potential applied on electrode 301 to be the same. The same may be done for electrodes 304 and 302.
If the light modulator is operating dark to clear and a vertical field is expected in the optical layer. The electrode pairs 301, 302, and 303, 304, and 305, 306 are expected to be at the same potentials. The potentials on electrodes 303, 304 may be fluctuating because of solar exposure. The drive system is configured to measure the evolution of the potentials and adjust the potentials on electrodes 301 and 302 to obtain the desired potential difference in the optical layer. Current generated by the energy conversion layer may be discharged to a battery or the grid or directly to the electronic board that drives the light modulator.

If the light modulator is operating from clear to dark, horizontal fields are expected in the optical layer. Potential differences between pairs 303, 305 and 304, 306 are expected to be the same but fluctuate depending on solar exposure. Potentials on electrodes 301 and 302 and electrodes 303 and 304 are expected to be different. As the potential difference between 303, 305 and 304, 306 are expected to be the same, the drive system may be configured to measure the potentials of electrodes 303, 304, 305, and 306 and shift the potentials of pair 301, 302 and 303, 304 to maintain the same potential difference between 303, 305 and 304, 306, and enable potential differences between 303, 305 and 301, 302.

Electrodes 305, 306 are preferably transparent or partially transparent, e.g., if the energy conversion layer is placed only behind the electrodes. When the energy conversion layer is slightly larger than the electrodes, then electrodes 305, 306 need not be transparent.

Consider the following example situations:

Maintained black state, energy conversion in use
The following potentials may be used: electrode 305 = 3V, electrode 306= 3V.

Electrodes 301, 302, 303, 304 = 0V to maintain a black state. The 0V level could be anything else, as long as it is equal for the four electrodes. The potential between electrodes 303-305 and 304-306 may vary depending on sun exposure.

Vertical drive, energy conversion in use

Electrodes 303, 304 may be driven to ground. Electrodes 305, 306 fluctuate because of the sun. Electrodes 301, 302 may be driven to create electric fields. For example, one may have the following values: Electrodes 305, 306 = 3V, Electrodes 303, 304 = 0V (caused by light), Electrodes 301, 302 = +/-20V (preferably oscillating).

Horizontal drive

The following values could be used:

Electrode 305 = +21V, Electrode 306 = -21V,
Electrode 303 = +24V, Electrode 304 = -24V,
Electrode 301 = +24V, Electrode 302 = -24V
Or
Electrode 305 = -21V, Electrode 306 = +21V,
Electrode 303 = -24V, Electrode 304 = +24V,
Electrode 301 = -24V, Electrode 302 = +24V

Note that the difference between 305, 303 and 306, 304 remains the same, but a DC offset is added. Either of these examples can be used with DC driving. The system can also use both and alternate between them, possibly continuously.

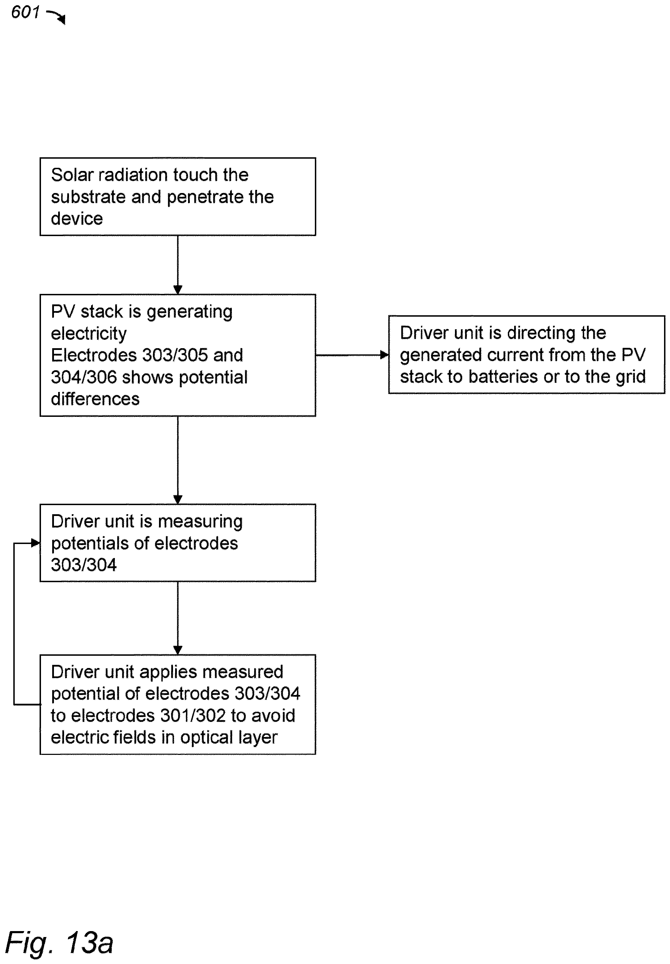

Figure 13a schematically shows an example of a controlling method 601 for a four-electrode light modulator system. Method 601 maintains the light modulator in a dark state and/or without electric fields through the ink.

The method comprises the following elements.

Solar radiation touches the substrate and penetrates the panel,

- Photovoltaic stack generates electricity. Electrodes 303/305 and 304/306 show potential differences; a driver system directs the generated current from the PV stack to batteries or to the grid,
- Driver system measures potentials of electrodes 303/304
- Driver system applies measured potential of electrodes 303/304 to electrodes 301/302 to avoid electric fields in the optical layer

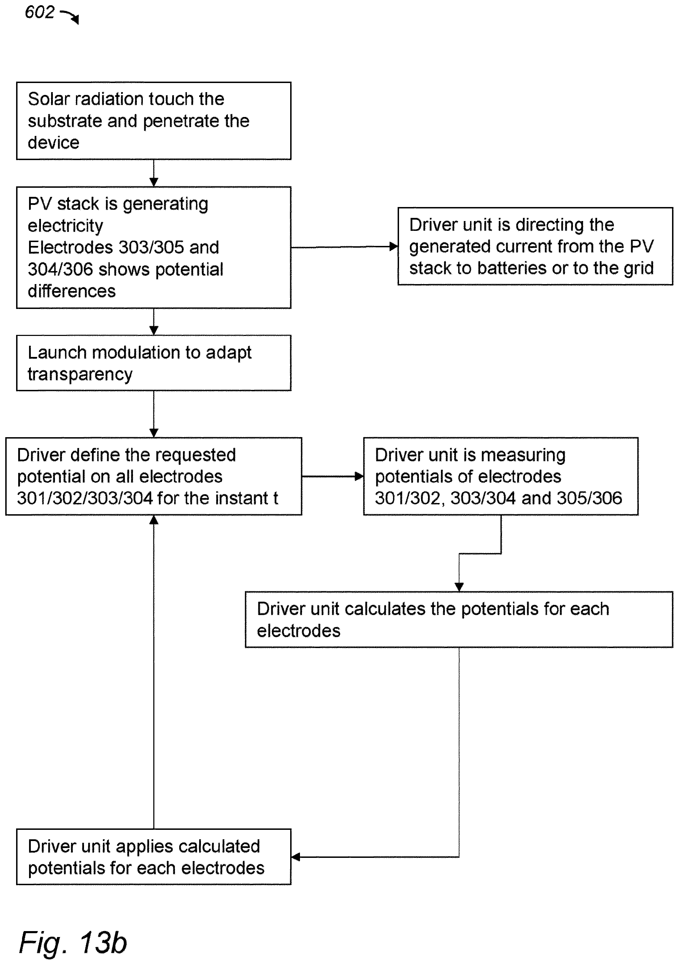

Figure 13b schematically shows an example of a controlling method 602 for a four-electrode light modulator system. Method 602 may be used to drive the light modulator from dark to clear or to increase the transmission or from clear to dark or to decrease the transmission.

Method 602 comprises
Solar radiation touches the substrate and penetrates the device

- PV stack generates electricity. Electrodes 303/305 and 304/306 show potential differences. Driver system directs the generated current from the PV stack to batteries or to the grid
- Launch modulation to adapt transparency. This may be the usual modulation on electrodes 301, 302, 303, and 304.
- The driver system defines the requested potential on all electrodes 301/302/303/304 for the instant t
- Driver system also measures the actual potentials of electrodes 301/302, 303/304, and 305/306
- Driver unit calculates the potentials for each electrode
- Driver unit applies calculated potentials for each electrode

The latter four parts may be repeated until the desired transparency is reached.
To increase transparency, the potentials may be computed as follows. The initial potential is marked i, the final potentials are marked f. Et is the target potential difference. V stands for voltage.

$$V305f\text{-}V306f = V303f\text{-}V304f = V305i\text{-}V306i = V303i\text{-}V304i$$

$$Et = V301f\text{-}V303f = V302f\text{-}V304f$$

To decrease transparency, the potentials may be computed as follows.

$$V305f\text{-}V306f = V303f\text{-}V304f = V305i\text{-}V306i = V303i\text{-}V304i$$

$$Et = V301f\text{-}V302f = V303f\text{-}V304f$$

$$V301f = V303f$$

$$V302f = V304f$$

An advantage of an embodiment with multiple substrate-side electrodes is that energy conversion does not need to be interrupted when transparency is decreased.
The four-electrode light modulator system as described allows for efficient control of transparency while maintaining energy conversion capabilities. The drive system measures and adjusts the potentials of the electrodes to obtain the desired potential difference in the optical layer, enabling the device to function effectively even as the energy conversion layer generates electricity due to solar exposure. By monitoring and adjusting electrode potentials, the light modulator can provide a range of transparency levels while continuing energy generation.

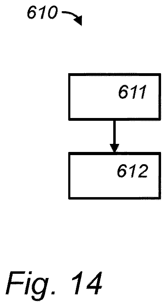

**Figure 14** schematically shows an example of a controlling method for a light modulator method 610. Method 610 may be used for a light modulator comprising a first substrate according to an embodiment. A second substrate may also be according to an embodiment, or may only comprise optical layer-side electrodes, etc. Method 610 comprises

- applying 611 an electric potential to at least the optical layer-side electrode of the at least one electrode system, thus modifying optical properties of the light modulator, and
- converting 612 energy to or from an electric voltage difference between the substrate-side electrode and the optical layer-side electrode by the energy conversion layer.

For example, the light modulator may be connected to a power generation system. Method 610 may comprise selectively connection and disconnecting the optical layer-side electrode from the power generation system. The optical layer-side electrode may be disconnected to allow lateral electric field to be applied.
Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform an embodiment of method 610. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

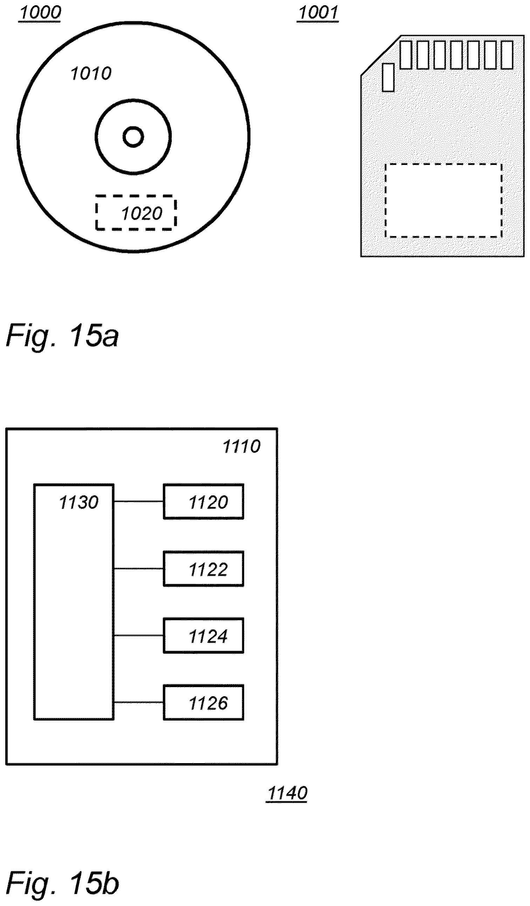

**Figure 15a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method for a light modulator, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method for a light modulator.

**Figure 15b** shows in a schematic representation of a processor system 1140 according to an embodiment of a light modulator system. The processor system comprises one or more integrated circuits 1110. The architecture of the one or more integrated circuits 1110 is schematically shown in Figure 15b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., a light modulator system, may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A transparent substrate (307) for use in a light modulator, the light modulator having an optical layer, the transparent substrate having at least one electrode system (305, 309, 303; 306, 309, 304) applied on the substrate, the electrode system comprising a stack of a substrate-side electrode (305; 306), an energy conversion layer (309), and an optical layer-side electrode (303; 304), the optical layer-side electrode being arranged to modulate an electric field in the optical layer, the energy conversion layer (309) being configured to convert between energy external to the substrate and a voltage difference between the substrate-side electrode (305; 306) and the optical layer-side electrode (303; 304).

2. The substrate as in Claim 1, wherein the energy conversion layer (309) comprises one or more of the following list:

   - a photovoltaic stack configured to convert light incident on the substrate to the voltage difference,
   - a thermoelectric stack configured to convert a heat difference between two sides of the substrate in the voltage difference,
   - a radio frequency energy scavenger layer,
   - an LED configured to convert the voltage difference to light.

3. The substrate as in any of the preceding claims, wherein the optical layer-side electrode is arranged as a voltage reference for the energy conversion layer.

4. The substrate as in any of the preceding claims, wherein the substrate-side electrode (305) and/or the optical layer-side electrode (303) comprises a large-area electrode.

5. The substrate of any of the preceding claims, wherein the energy conversion layer is arranged across the substrate in multiple lines, a dielectric being arranged between the multiple lines of the energy conversion layer.

6. The substrate of any of the preceding claims, wherein the energy conversion layer is arranged in a large area across the substrate.

7. The substrate of any of the preceding claims, wherein the electrode system is arranged across the substrate in multiple lines, the substrate-side electrode and the optical layer-side electrode being arranged in multiple electrode lines.

8. A substrate as in Claim 7, wherein the at least one electrode system comprises a first electrode system (305, 309, 303) and a second electrode system (306, 309, 304), the multiple lines of the first electrode system being interdigitated with the multiple lines of the second electrode system, a dielectric being applied between the interdigitated lines of the first and second electrode system, electrically isolating the substrate-side electrode and the optical layer-side electrode of the first electrode system from the substrate-side electrode and the optical layer-side electrode of the second electrode system.

9. A substrate as in Claim 8 any of the preceding claims, wherein the multiple electrode lines in the substrate-side electrode of the at least one electrode system and the multiple electrode lines in the optical layer-side electrode of the at least one electrode system align when projected orthogonally on the substrate.

10. A substrate as in the combination of claims 5 and 9, and any of the preceding claims, wherein

   - the energy conversion layer of the at least one electrode system and the multiple electrode lines in the substrate-side electrode and the optical layer-side electrode align when projected orthogonally on the substrate, or
   - the energy conversion layer of the at least one electrode system extends beyond the borders of the multiple electrode lines in the substrate-side electrode and the optical layer-side electrode align when projected orthogonally on the substrate.

11. A substrate as in any of the preceding claims, wherein

   - the substrate-side electrode, the optical layer-side electrode, and the energy conversion layer are transparent,
   - the substrate-side electrode, the optical layer-side electrode, are transparent, the energy conversion layer is arranged across the substrate in a pattern across the substrate, covers at most part of the substrate,
   - the substrate-side electrode, and/or the optical layer-side electrode comprises two layers, a transparent large area electrode, and a patterned non-transparent electrode,
   - the optical layer-side electrode comprises a transparent, large-area electrode, and a patterned, reflective electrode aligned with the energy conversion layer.

12. A substrate, as in any of the preceding claims, comprising multiple energy conversion layers.

13. A transparent substrate as in any of the preceding claims, wherein a high conductivity material is applied to the substrate.

14. A light modulator comprising a first substrate as in any of Claims 1-13, and a second substrate arranged opposite the first substrate, an optical layer extending between the first and second substrate, at least one optical layer-side electrode is applied on the second substrate, optical properties of the light modulator are modifiable by applying an electric potential to at least the optical layer-side electrode of the at least one electrode system,

   - energy is converted to or from an electric voltage difference between the substrate-side electrode and the optical layer-side electrode by the energy conversion layer.

15. A light modulator as in Claim 14, comprising a light modulator drive system and

   - a light modulator drive system being configured to control an electric potential on optical layer-side electrodes of the first and/or second substrate, and
   - a power generation system configured to generate an electric current from the energy conversion layer on at least on the first substrate, wherein
   - the optical layer-side electrode on the first substrate is selectively connected to the power generation system.

16. A light modulator as in any of the preceding light modulator claims, wherein the optical layer-side electrode on the first substrate is connected to the power generation system through a first selective connection, and to the light modulator drive system through a second selective connection, the first and second selective connection being controlled to connect the optical layer-side electrode selectively to the light modulator drive system or the power generation system.

17. A light modulator as in any of the preceding light modulator claims, wherein

   - the electrode being arranged across the second substrate in multiple electrode lines, or
   - the second substrate is a substrate according to any of Claims 1-13, and wherein optical properties of the light modulator are further modifiable by applying an electric potential to the optical layer-side electrode of the second substrate.

18. A light modulator as in any of the preceding light modulator claims, the optical layer comprising a fluid, the fluid comprising particles, the light modulator being configured to apply an electric potential to the optical layer-side electrode of the at least on electrode system causing modulation of an electric field in the optical layer providing electrophoretic and/or dielectrophoretic movement of the particles in the optical layer causing modulation of light passing through the substrates.

19. An electrophoretic light modulator as in any of the preceding light modulator claims, the particles being electrically charged or chargeable, at least a first electrode system and a second electrode system being applied on the first substrate, the multiple lines of the first electrode system and the second electrode system alternating on the first substrate, at least a first optical layer-side electrode and a second optical layer-side electrode being applied on the second substrate, multiple lines of the first optical layer-side electrode and the second optical layer-side electrode alternating on the second substrate..

20. A light modulator as in Claim 19, the light modulator drive system configured to control an electric potential on the optical layer-side electrodes of the second substrate and the optical layer-side electrodes in the electrode systems on the first substrate to obtain an electro-magnetic field between the multiple optical layer-side electrodes providing electrophoretic movement of the particles towards or from one of the multiple optical layer-side electrodes causing modulation of the optical properties of the light modulator.

21. A light modulator as in any of the preceding light modulator claims, the light modulator drive system being configured to control the electric potential as an alternating current or voltage.

22. An electrophoretic light modulator as in any of the preceding Claims, wherein

    - the light modulator drive system is configured to maintain the light modulator in a non-transparent state, by controlling to be equal the potential on the first optical layer-side electrode on the second substrate and the second optical layer-side electrode on the second substrate to be equal to the potential on the optical layer-side electrode of the first electrode system and the optical layer-side electrode of the second electrode system.

23. An electrophoretic light modulator as in any of the preceding claims, wherein

    - the light modulator drive system is configured to transition the light modulator from a less-transparent state to a more transparent state, by controlling the first optical layer-side electrode and the second optical layer-side electrode on the second substrate to have different potentials than the opposite optical layer-side electrode on the first substrate.

24. An electrophoretic light modulator as in any of the preceding claims, wherein

    - the light modulator drive system is configured to transition the light modulator from a more-transparent state to a less-transparent state by controlling the potential on the substrate-side electrode and the optical layer-side electrode in the first electrode system to both be offset in a first direction, and by controlling the potential on the substrate-side electrode and the optical layer-side electrode in the second electrode system to both be offset in a second direction opposite the first direction, and controlling the potential on the first optical layer-side electrode and the second-optical layer-side electrode on the second substrate to be equal the optical layer-side electrode opposite on the first substrate.

25. A light modulator as in any one of the preceding claims, comprising

    - multiple energy conversion layers of one or more different types, and one optical layer, or
    - one energy conversion layers, and multiple optical layers, or
    - multiple energy conversion layers of one or more different types, and multiple optical layers.

26. A light modulator method for a light modulator comprising a first substrate as in any of Claims 1-13, and a second substrate arranged opposite the first substrate, an optical layer extending between the first and second substrate, at least one optical layer-side electrode is applied on the second substrate, the method comprising applying an electric potential to at least the optical layer-side electrode of the at least one electrode system, thus modifying optical properties of the light modulator, and converting energy to or from an electric voltage difference between the substrate-side electrode and the optical layer-side electrode by the energy conversion layer.

27. A system comprising: one or more processors; and one or more storage devices storing instructions that, when executed by the one or more processors, cause the one or more processors to perform operations for a method according to Claim 26.

28. A non-transitory computer storage medium encoded with instructions that, when executed by one or more computers, cause the one or more computers to perform operations according to Claim 26.

29. A method of manufacturing a substrate as in any of the preceding claims, comprising

   - providing a transparent substrate,
   - applying a substrate-side electrically conducting layer to the substrate,
   - applying a photovoltaic stack layer to the substrate,
   - applying an optical layer-side layer electrically conducting layer to the substrate,
   - applying a dielectric coating to the substrate.

Fig. 1a

Fig. 1b

Fig. 1c

Fig. 1d

Fig. 1e

604

| 651 | 652 | 651 | 652 |
| 661 | 662 | 661 | 662 |
| 651 | 652 | 651 | 652 |
| 661 | 662 | 661 | 662 |

## Fig. 1f

151

## Fig. 1g

Fig. 2a

Fig. 2b

Fig. 2c

Fig. 2d

Fig. 2e

Fig. 2f

Fig. 3a

Fig. 3b

Fig. 3c

**10**

**13**

**11**

**30**

**15**

**14**

**12**

*Fig. 4a*

**10**

**13**

**11**

**15**

**14**

**12**

*Fig. 4b*

*13a*  *13b*  **10**

**11**

**15**

*14a*  *14b*

**12**

*Fig. 4c*

*Fig. 5*

321

307

305
303

310

309

312

311

311

301

308

*Fig. 6a*

322

305
303

309

301

*Fig. 6b*

323

305

303

301

Fig. 7a

324

305

303.1

303.2

301

Fig. 7b

325

305
303.1

303.2

301.1
301.2

308

*Fig. 7c*

326

305

303

301

*Fig. 7d*

327

305
303.1

303.2

301

*Fig. 7e*

328

305

303.1

303.2

301

Fig. 7f

329

305    305    305    305    305
303    303    303    303    303

303

301    301    301    301    301

*Fig. 7g*

330

305
303.1

303.2

301    302    301    302    301

*Fig. 8a*

331

305   305   305   304   305   305   304   305
303   304   303   303

303

301   302   301   302   301

Fig. 9a

332

305    306    305    306    305
    303    304    303    304    303

301    302    301    302    301

**Fig. 9b**

333

305   306   305   306   305
  303     304     303     304

303

301   302   301   302   301

*Fig. 9c*

334

*309a*

*309b*

*Fig. 9d*

335

305  306  305  306  305
303  304  303  304
303

301  302  301  302  301

314  315  314  315  314

*Fig. 9e*

Fig. 10a

Fig. 10b

Fig. 10c

*Fig. 10d*

Fig. 11a

Fig. 11b

Fig. 12

601

```
┌─────────────────────────┐
│ Solar radiation touch the│
│ substrate and penetrate  │
│ the device               │
└─────────────────────────┘
            │
            ▼
┌─────────────────────────┐        ┌──────────────────────────┐
│ PV stack is generating   │        │ Driver unit is directing  │
│ electricity              │───────▶│ the generated current from│
│ Electrodes 303/305 and   │        │ the PV stack to batteries │
│ 304/306 shows potential  │        │ or to the grid            │
│ differences              │        └──────────────────────────┘
└─────────────────────────┘
            │
            ▼
┌─────────────────────────┐
│ Driver unit is measuring │
│ potentials of electrodes │
│ 303/304                  │
└─────────────────────────┘
            │
            ▼
┌─────────────────────────┐
│ Driver unit applies      │
│ measured potential of    │
│ electrodes 303/304 to    │
│ electrodes 301/302 to    │
│ avoid electric fields in │
│ optical layer            │
└─────────────────────────┘
```

## Fig. 13a

602 ⟍

```
┌─────────────────────────┐
│ Solar radiation touch the │
│ substrate and penetrate the │
│ device │
└─────────────────────────┘
            │
            ▼
┌─────────────────────────┐          ┌──────────────────────────────┐
│ PV stack is generating │          │ Driver unit is directing the │
│ electricity │          │ generated current from the PV │
│ Electrodes 303/305 and │ ───────▶ │ stack to batteries or to the grid │
│ 304/306 shows potential │          └──────────────────────────────┘
│ differences │
└─────────────────────────┘
            │
            ▼
┌─────────────────────────┐
│ Launch modulation to adapt │
│ transparency │
└─────────────────────────┘
            │
            ▼
┌──────────────────────────────┐        ┌──────────────────────────────┐
│ Driver define the requested │        │ Driver unit is measuring │
│ potential on all electrodes │ ─────▶ │ potentials of electrodes │
│ 301/302/303/304 for the instant t │    │ 301/302, 303/304 and 305/306 │
└──────────────────────────────┘        └──────────────────────────────┘
            ▲                                        │
            │                                        ▼
            │                        ┌──────────────────────────────────────┐
            │                        │ Driver unit calculates the potentials for each │
            │                        │ electrodes │
            │                        └──────────────────────────────────────┘
            │                                        │
┌──────────────────────────────┐                    │
│ Driver unit applies calculated │ ◀────────────────┘
│ potentials for each electrodes │
└──────────────────────────────┘
```

*Fig. 13b*

610

611

612

Fig. 14

1000
1001

1010

1020

Fig. 15a

1110

1130    1120

1122

1124

1126

1140

Fig. 15b

Europäisches
Patentamt

European
Patent Office

Office européen
des brevets

# EUROPEAN SEARCH REPORT

**Application Number**

EP 23 16 7996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/365382 A1 (KOMITOV LACHEZAR [SE] ET AL) 17 November 2022 (2022-11-17) * the whole document * ----- | 1-29 | INV. G02F1/133 |
| X | US 2021/312846 A1 (ATKINSON PAUL [US] ET AL) 7 October 2021 (2021-10-07) * the whole document * ----- | 1-4,6, 11, 14-16, 18-23, 26-29 | |

**TECHNICAL FIELDS SEARCHED (IPC)**

G02F

The present search report has been drawn up for all claims

| Place of search | Date of completion of the search | Examiner |
|---|---|---|
| Munich | 14 September 2023 | Brumbarov, Jassen |

EPO FORM 1503 03.82 (P04C01)

## ANNEX TO THE EUROPEAN SEARCH REPORT
## ON EUROPEAN PATENT APPLICATION NO.

**EP 23 16 7996**

This annex lists the patent family members relating to the patent documents cited in the above-mentioned European search report.
The members are as contained in the European Patent Office EDP file on
The European Patent Office is in no way liable for these particulars which are merely given for the purpose of information.

**14-09-2023**

| Patent document cited in search report | | Publication date | Patent family member(s) | | | Publication date |
|---|---|---|---|---|---|---|
| US 2022365382 | A1 | 17-11-2022 | CN | 114270249 | A | 01-04-2022 |
| | | | EP | 3767380 | A1 | 20-01-2021 |
| | | | EP | 3999904 | A1 | 25-05-2022 |
| | | | US | 2022365382 | A1 | 17-11-2022 |
| | | | WO | 2021013524 | A1 | 28-01-2021 |
| US 2021312846 | A1 | 07-10-2021 | EP | 3384484 | A2 | 10-10-2018 |
| | | | US | 2017301273 | A1 | 19-10-2017 |
| | | | US | 2021312846 | A1 | 07-10-2021 |
| | | | WO | 2017096335 | A2 | 08-06-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022023180 A
- WO 2011012499 A1
- WO 2011131689 A
- US 10921678 B
- US 8054535 B2
- US 8384658 B2
- US 2005185104 A1
- US 20180239211 A1
- US 5161048 A
- US 20050185104 A1
- EP 2020052379 W
- US 20210149265 A1

**Non-patent literature cited in the description**

- **ANTÓNIO CALIFÓRNIA.** *Silver grid electrodes for faster switching ITO free electrochromic devices*